# EUROPEAN PATENT APPLICATION

(11) **EP 4 694 087 A1**
(43) Date of publication of application: **11.02.2026**
(21) Application number: 24857726.4
(22) Date of filing: 21.03.2024
(51) Int. Cl.: H04L 67/1095

(54) **MULTIMEDIA RESOURCE ACCESS METHOD AND ELECTRONIC DEVICE**

(30) Priority: 25.08.2023 CN 202311085365
(71) Applicant: Honor Device Co., Ltd., Shenzhen, Guangdong 518040 (CN)
(72) Inventor: ZHANG, Jie, Shenzhen, Guangdong 518040 (CN)
(74) Representative: Thun, Clemens
(86) International application number: PCT/CN2024/083095
(87) International publication number: WO 2025/044174

(57) **Abstract**

A multimedia resource access method and an electronic device are provided, relating to the field of terminal technologies. The electronic device can flexibly access a multimedia resource in a gallery of another electronic device locally. The method includes: The first device displays a first interface, where the first interface includes a first region and a second region, a first option, a second option, and a third option are displayed in the first region, the first option corresponds to the first device, the second option corresponds to a second device, the third option corresponds to a third device, and preview information of an album on the first device is displayed in the second region; the first device displays, in the second region, preview information of an album on the second device in response to a selection operation for the second option; and the first device displays, in the second region, preview information of an album on the third device in response to a selection operation for the third option.

## Description

This application claims priority to Chinese Patent Application No. 202311085365.4, filed with the China National Intellectual Property Administration on August 25, 2023 and entitled "MULTIMEDIA RESOURCE ACCESS METHOD AND ELECTRONIC DEVICE", which is incorporated herein by reference in its entirety.

### TECHNICAL FIELD

Embodiments of this application relate to the field of terminal technologies, and in particular, to a multimedia resource access method and an electronic device.

### BACKGROUND

During use of an electronic device, for example, a mobile phone or a tablet, access can be generally performed on a multimedia resource, for example, a picture and a video in a gallery. However, in the conventional technology, an electronic device can generally access only a multimedia resource in a local gallery.

### SUMMARY

This application provides a multimedia resource access method and an electronic device. The electronic device can flexibly access a multimedia resource in a gallery of another electronic device locally.

To achieve the foregoing objective, the following technical solutions are used in embodiments of this application.

According to a first aspect, this application provides a multimedia resource access method, including: The first device displays a first interface (for example, an album page), where the first interface includes a first region and a second region, a first option, a second option, and a third option are displayed in the first region, the first option corresponds to the first device, the second option corresponds to a second device, the third option corresponds to a third device, and preview information of an album on the first device is displayed in the second region; the first device displays, in the second region, preview information of an album on the second device in response to a selection operation for the second option; and the first device displays, in the second region, preview information of an album on the third device in response to a selection operation for the third option.

In conclusion, according to this application, the first device can switch, on the first interface, to access the second device and the album on the second device. First, the first device may access albums in at least two devices other than the first device, so that a user conveniently obtains more albums locally. Second, in an access switching process, the user does not need to perform an operation like returning, so that access convenience is improved.

In a possible design manner of the first aspect, after the first device displays, in the second region, the preview information of the album on the second device, the first device displays a second interface (for example, a grid page) in response to an access operation that is for a first album on the second device and that is on the first interface, where the second interface includes a thumbnail of a multimedia resource in the first album. The first device displays a third interface (for example, a full picture page) in response to a viewing operation for a first thumbnail on the second interface, where the third interface is used to present a first multimedia resource corresponding to the first thumbnail. In other words, a multimedia resource in the album may be further viewed in the first device. Subsequently, after the first device is disconnected from the second device, the first device displays a fourth interface in response to a return operation for the third interface, where the fourth interface includes the first option and the third option, and the fourth interface does not include the preview information of the album on the second device.

In other words, after the first device is disconnected from the second device, the first device does not normally return to the grid page in response to an operation of returning to the grid page, but directly returns to the album page, and does not provide, on the album page, the preview information of the album on the second device. In this way, it can be ensured that after the first device is disconnected from the second device, excessive information of multimedia resources on the second device is not presented to the user.

In a possible design manner of the first aspect, the fourth interface further includes the second option.

In a possible design manner of the first aspect, that the first device displays a fourth interface including the second option in response to a return operation for the third interface includes: The first device displays, the first device can find the second device, the fourth interface including the second option in response to the return operation for the third interface.

In other words, after the first device is disconnected from the second device, if the first device can still find the second device, for example, if the second device approaches the first device after being away from the first device, an option for accessing the second device may continue to be provided, allowing the first device to access the album on the second device again.

In a possible design manner of the first aspect, the fourth interface does not include the second option.

In a possible design manner of the first aspect, that the first device displays a fourth interface not including the second option in response to a return operation for the third interface includes: The first device displays, the first device does not find the second device, the fourth interface not including the second option in response to the return operation for the third interface.

In other words, after the first device is disconnected from the second device, if the first device cannot find the second device, for example, if the second device no longer approaches the first device after being away from the first device, an option for accessing the second device is no longer provided, to avoid providing an unavailable option.

In a possible design manner of the first aspect, after that the first device displays a third interface, the first device displays, the first device is not disconnected from the second device, the second interface in response to the return operation for the third interface. The first device displays, in response to a return operation for the second interface, the first interface on which the second region includes the preview information of the album on the second device.

In other words, if the first device is not disconnected from the second device, the first device may normally return from the third interface to the second interface and then return to the first interface, and may continue to display, on the first interface, the preview information of the album on the second device, to facilitate returning to select the multimedia resource.

In a possible design manner of the first aspect, that the first device displays a fourth interface in response to a return operation for the third interface includes: The first device displays, the first device detects that the first device is disconnected from the second device, the fourth interface in response to the return operation for the third interface.

In practice, a moment at which the first device is disconnected from the second device may be different from a moment at which it is detected that the first device is disconnected from the second device. Generally, the moment at which disconnection is detected is after the moment at which disconnection occurs. In addition, only after the disconnection is detected, the first device can respond to a disconnection scenario. Therefore, the first device can display the fourth interface not including the preview information of the album on the second device only in response to the operation of returning to the grid page and when the disconnection is detected.

In a possible design manner of the first aspect, that the first device displays, the first device detects that the first device is disconnected from the second device, the fourth interface in response to the return operation for the third interface includes: The first device displays the fourth interface in response to a return operation for the third interface at a first moment, where the first moment is a moment after the first device detects that the first device is disconnected from the second device. In other words, the first device can display the fourth interface not including the preview information of the album on the second device only in response to the operation of returning to the grid page at the first moment after the disconnection is detected.

In addition, the method further includes: The first device displays the second interface in response to a return operation for the third interface at a second moment. The second moment is a moment after the first device is disconnected from the second device, but the second moment is a moment before the first device detects that the first device is disconnected from the second device. In other words, at the second moment after the disconnection, but before the disconnection is detected, the first device can still return to the grid page normally in response to the operation of returning to the grid page, to provide the thumbnail of the multimedia resource for selection and viewing.

In a possible design manner of the first aspect, the first device includes a data middle platform and a first application, where the first application includes a gallery application, or the first application includes an application having a permission to access the gallery application, for example, a chat application or a picture editing application. After the first device is disconnected from the second device, the data middle platform detects that the first device is disconnected from the second device. The data middle platform sends a disconnection notification to the first application, where the disconnection notification indicates that the first application is not allowed to access the data middle platform. Correspondingly, that the first device displays a fourth interface in response to a return operation for the third interface includes: The first application displays, if the first application has received the disconnection notification, the fourth interface in response to the return operation for the third interface.

In other words, the first application can accurately determine, by using the disconnection notification, that the first application is currently in the disconnection scenario, and display the fourth interface not including the preview information of the album on the second device in response to the operation of returning to the grid page.

According to the design manner, especially for external applications such as a chat application and a video editing application, data security in the second device can be further ensured.

In a possible design manner of the first aspect, the third interface further includes a preset operation control, where the preset operation control includes a save control and/or a copy control. After that the first device displays a third interface, the method further includes: The first device stores the first multimedia resource into a second album on the first device in response to a selection operation for the preset operation control.

In other words, the first device can further copy or store, in the first device, the multimedia resource on the second device.

In a possible design manner of the first aspect, the first multimedia resource is a still picture, or the first multimedia resource is a video, but the first device has not played back the video on the third interface. That the first device stores the first multimedia resource into a second album on the first device in response to a selection operation for the preset operation control includes: The first device displays a first prompt on the third interface in response to the selection operation for the preset operation control, where the first prompt is used to prompt that a file is being transferred; and the first device stores the first multimedia resource into the second album after transfer of the file ends.

For the still picture or the video that has not been played back on the full picture page, the first device has not obtained original picture information. Therefore, the first device needs to obtain the original picture information from the second device in response to the selection operation of the user for the preset control, and this process is time-consuming. Based on this, the first prompt is displayed to indicate that the user needs to wait.

In a possible design manner of the first aspect, the first multimedia resource is a dynamic picture, or the first multimedia resource is a video, and the first device has played back the video on the third interface, and the first device skips displaying the first prompt in response to the selection operation for the preset operation control.

For the dynamic picture or the video that has been played back on the full picture page, the first device has obtained original picture information. Therefore, the first device only needs to locally obtain the original picture information in response to the selection operation of the user for the preset control. This process consumes very short time, and therefore, the first prompt may not be displayed, and a result of a preset operation, for example, a result of successful saving or successful copying, is directly presented.

In a possible design manner of the first aspect, the preset operation control is the save control, and the second album is an album named after the second device.

In this way, it is convenient to distinguish multimedia resources from different devices.

In a possible design manner of the first aspect, after that the first device stores the first multimedia resource into a second album on the first device, the method further includes: The first device displays a fifth interface, where the fifth interface includes the preview information of the album on the first device, and preview information of the second album is located behind preview information of a last system album on the album on the first device.

In this way, it is convenient to quickly locate, after the system album, an album on which a multimedia resource from another device is stored.

In a possible design manner of the first aspect, the preset operation control is the copy control. That the first device stores the first multimedia resource into a second album on the first device in response to a selection operation for the preset operation control includes: The first device displays the preview information of the album on the first device in response to the selection operation for the preset operation control; and the first device stores the first multimedia resource into the second album on the first device in response to a selection operation for the second album on the first device.

In other words, the first device can accurately copy the multimedia resource from the second device to an album specified by the user.

In a possible design manner of the first aspect, the method further includes: The first device displays a sixth interface, where the sixth interface includes a photo on the first device, and in a process of displaying the sixth interface, the first device finds the second device and the third device. Correspondingly, that the first device displays a first interface includes: The first device displays the first interface in response to an operation of switching to the album page, where the second option and the third option are located behind the first option, and the second option and the third option are sorted based on priorities of the second device and the third device.

In other words, before the first interface is entered, options of other devices discovered by the first device may be displayed on the first device based on priorities of the devices. In this way, an option of a device with a high priority may be displayed first for ease of viewing.

In a possible design manner of the first aspect, that the first device displays, in the second region, preview information of an album on the second device in response to a selection operation for the second option includes: The first device displays, in the second region, if a quantity of devices connected to the first device does not reach a first quantity, the preview information of the album on the second device in response to the selection operation for the second option.

In other words, when the quantity of devices connected to the first device is less than the first quantity, the first device can continue to establish connection with the second device to obtain and display information of the album on the second device.

In a possible design manner of the first aspect, that the first device displays, in the second region, preview information of an album on the second device in response to a selection operation for the second option includes: The first device displays, if a quantity of devices connected to the first device reaches a first quantity, a first window in response to the selection operation for the second option, where the first window includes device options in one-to-one correspondence with the first quantity of connected devices, the first quantity of device options include a first device option, and the first device option corresponds to a fourth device; the first device disconnects from the fourth device in response to a disconnection operation for the first device option; and the first device displays, in the second region, the preview information of the album on the second device.

In other words, when the quantity of devices connected to the first device is greater than the first quantity, the first device needs to disconnect from a connected device before continuing to establish connection with the second device to obtain and display information of the album on the second device.

In a possible design manner of the first aspect, the method further includes: The first device displays, if the quantity of devices connected to the first device reaches the first quantity, the first window in response to the selection operation for the second option; and the first device displays, in the second region in response to an operation indicating to close the first window, prompt information indicating that a quantity of connected devices has exceeded an upper limit.

In other words, when the quantity of devices connected to the first device is greater than the first quantity, the first device may alternatively continue to connect to the connected devices based on a selection of the user, and does not connect to a new device.

According to a second aspect, this application further provides an electronic device, including: a display, a memory, and one or more processors, where the memory is coupled to the processor. The memory stores computer program code. The computer program code includes computer instructions. When the computer instructions are executed by the processor, the electronic device is enabled to perform the method according to any one of the first aspect and the possible design manners of the first aspect.

According to a third aspect, this application further provides a chip system. The chip system is used in an electronic device including a display, a processor, and a memory. The chip system includes one or more interface circuits and one or more processors. The interface circuit is interconnected to the processor through a line. The interface circuit is configured to: receive a signal from the memory and send a signal to the processor. The signal includes computer instructions stored in the memory. When the processor executes the computer instructions, the electronic device is enabled to perform the method according to any one of the first aspect and the possible design manners of the first aspect.

According to a fourth aspect, this application further provides a computer-readable storage medium including computer instructions. When the computer instructions are run on an electronic device, the electronic device is enabled to perform the method according to any one of the first aspect and the possible design manners of the first aspect.

According to a fifth aspect, this application provides a computer program product. When the computer program product runs on a computer, the computer is enabled to perform the method according to any one of the first aspect and the possible design manners of the first aspect.

It may be understood that, for beneficial effects that can be achieved by the electronic device, the chip system, the computer storage medium, and the computer program product provided above, refer to the beneficial effects according to any one of the first aspect and the possible design manners of the first aspect. Details are not described herein again.

### BRIEF DESCRIPTION OF DRAWINGS

FIG. 1 is a schematic diagram of a networking form according to an embodiment of this application;
FIG. 2 is a schematic diagram of another networking form according to an embodiment of this application;
FIG. 3A is a schematic diagram of a principle of synchronizing a multimedia resource between devices according to an embodiment of this application;
FIG. 3B is a diagram of a hardware structure of a mobile phone according to an embodiment of this application;
FIG. 4 is a first schematic diagram of an interface of a mobile phone according to an embodiment of this application;
FIG. 5A and FIG. 5B are a second schematic diagram of an interface of a mobile phone according to an embodiment of this application;
FIG. 6 is a third schematic diagram of an interface of a mobile phone according to an embodiment of this application;
FIG. 7A is a fourth schematic diagram of an interface of a mobile phone according to an embodiment of this application;
FIG. 7B is a fifth schematic diagram of an interface of a mobile phone according to an embodiment of this application;
FIG. 7C is a sixth schematic diagram of an interface of a mobile phone according to an embodiment of this application;
FIG. 8 is a seventh schematic diagram of an interface of a mobile phone according to an embodiment of this application;
FIG. 9 is an eighth schematic diagram of an interface of a mobile phone according to an embodiment of this application;
FIG. 10 is a diagram of a principle of accessing a multimedia resource in a disconnection scenario according to an embodiment of this application;
FIG. 11 is a ninth schematic diagram of an interface of a mobile phone according to an embodiment of this application;
FIG. 12A and FIG. 12B are a tenth schematic diagram of an interface of a mobile phone according to an embodiment of this application;
FIG. 13A and FIG. 13B are an eleventh schematic diagram of an interface of a mobile phone according to an embodiment of this application;
FIG. 14 is a twelfth schematic diagram of an interface of a mobile phone according to an embodiment of this application;
FIG. 15 is a thirteenth schematic diagram of an interface of a mobile phone according to an embodiment of this application;
FIG. 16 is a fourteenth schematic diagram of an interface of a mobile phone according to an embodiment of this application;
FIG. 17A is a fifteenth schematic diagram of an interface of a mobile phone according to an embodiment of this application;
FIG. 17B is a sixteenth schematic diagram of an interface of a mobile phone according to an embodiment of this application;
FIG. 18 is a seventeenth schematic diagram of an interface of a mobile phone according to an embodiment of this application;
FIG. 19 is an eighteenth schematic diagram of an interface of a mobile phone according to an embodiment of this application;
FIG. 20 is a nineteenth schematic diagram of an interface of a mobile phone according to an embodiment of this application;
FIG. 21 is a twentieth schematic diagram of an interface of a mobile phone according to an embodiment of this application;
FIG. 22 is a twenty-first schematic diagram of an interface of a mobile phone according to an embodiment of this application;
FIG. 23 is a twenty-second schematic diagram of an interface of a mobile phone according to an embodiment of this application;
FIG. 24 is a twenty-third schematic diagram of an interface of a mobile phone according to an embodiment of this application;
FIG. 25 is a twenty-fourth schematic diagram of an interface of a mobile phone according to an embodiment of this application; and
FIG. 26 is a twenty-fifth schematic diagram of an interface of a mobile phone according to an embodiment of this application.

### DESCRIPTION OF EMBODIMENTS

Technical solutions in embodiments of this application are described below with reference to the accompanying drawings in embodiments of this application. In descriptions of embodiments of this application, terms used in the following embodiments are only intended to describe particular embodiments, and are not intended to limit this application. As used in the specification and the appended claims of this application, the singular expressions "a/an", "said", "the foregoing", "the", and "this" are intended to include such expressions as "one or more", unless otherwise clearly indicated in the context. It should be further understood that, in the following embodiments of this application, "at least one" and "one or more" mean one or more than two (including two). The term "and/or" is used to describe an association relationship between associated objects, indicating that there are three types of relationships. For example, A and/or B may represent: only A exists, both A and B exist, and only B exists, where A and B may be singular or plural. The character "/" usually indicates an "or" relationship between associated objects.

A multimedia resource access method provided in embodiments of this application may be applied to a communication system provided in embodiments of this application. The communication system includes a plurality of electronic devices. Any electronic device may be a mobile phone, a tablet, a smart screen, or the like. Not limited to this, the electronic device may alternatively be a personal computer (personal computer, PC), a personal digital assistant (personal digital assistant, PDA), an augmented reality (augmented reality, AR) device, a virtual reality (virtual reality, VR) device, or the like. The electronic device may alternatively be another portable electronic device, for example, a laptop computer (Laptop).

A same user account (for example, an Honor account) is logged in on the plurality of electronic devices, or user accounts having a trust relationship such as family accounts and work group accounts are logged in on the plurality of electronic devices.

It may be understood that after the plurality of electronic devices on which the same user account is logged in or the user accounts having a trust relationship approach each other are logged in (for example, within a range of a Bluetooth communication distance), the plurality of electronic devices can be added to a same magic ring through identity authentication. Any electronic device in the magic ring can discover (or be referred to as find) another electronic device in the magic ring.

After a wireless local area network (wireless local area network, WLAN) is turned on, the plurality of electronic devices can access a same network provided by an access device. After accessing the same network, the plurality of electronic devices can implement communication connection and data transmission based on the network.

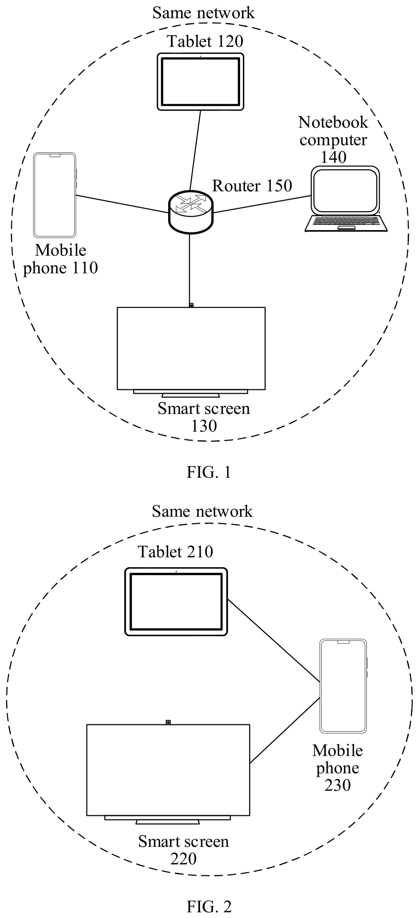

In a specific implementation, the access device is a router. For example, the plurality of electronic devices include a mobile phone 110, a tablet 120, a smart screen 130, and a notebook computer 140 shown in FIG. 1, and the access device is a router 150 shown in FIG. 1. After WLANs are turned on in the mobile phone 110, the tablet 120, the smart screen 130, and the notebook computer 140, the mobile phone 110, the tablet 120, the smart screen 130, and the notebook computer 140 can access a WLAN network of the router 150. Subsequently, the mobile phone 110, the tablet 120, the smart screen 130, and the notebook computer 140 can implement communication connection and data transmission through forwarding by using the router.

In another specific implementation, the access device is one of the plurality of electronic devices. For example, the plurality of electronic devices include a tablet 210, a smart screen 220, and a mobile phone 230 shown in FIG. 2, and the access device is the mobile phone 230. A WLAN hotspot on the mobile phone 230 is turned on, and after WLANs on the tablet 210 and the smart screen 220 are turned on, the tablet 210 and the smart screen 220 can access the WLAN hotspot of the mobile phone 230. Subsequently, the tablet 210 and the smart screen 220 can implement communication connection and data transmission through forwarding by using the mobile phone 230. In addition, the mobile phone 230 may implement communication connection and data transmission with the tablet 210 and the smart screen 220.

In the communication system, the plurality of electronic devices can discover each other. In addition, any electronic device can establish communication connection with a discovered electronic device and can transfer a multimedia resource, for example, a picture or a video, to share the multimedia resource between the plurality of electronic devices. In other words, any electronic device in the communication system can access multimedia resources on electronic devices in the communication system.

Further, the multimedia resource can be shared between the plurality of electronic devices by using a data middle platform.

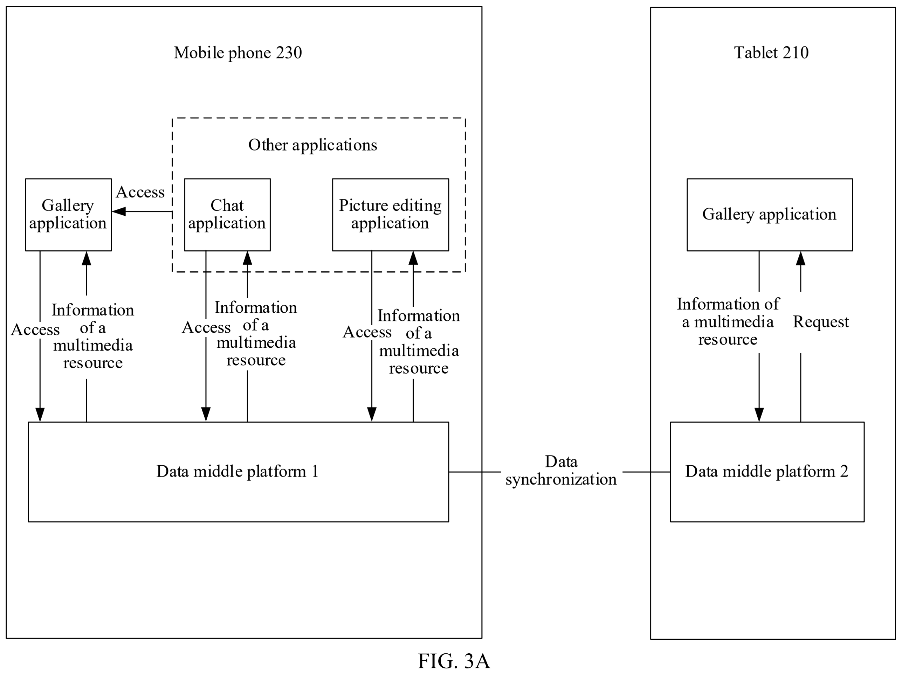

In an example in which the plurality of electronic devices include the mobile phone 230 and the tablet 210 in FIG. 3A, and the mobile phone 230 accesses a multimedia resource on the tablet 210, the mobile phone 230 includes a data middle platform 1, and further includes an application that has a requirement (or a permission) to access multimedia resources between devices, for example, a gallery application and another application (such as a chat application and a picture editing application). Moreover, the tablet 210 includes a data middle platform 2, and further includes a gallery application that can provide a multimedia resource. It should be noted that it is also possible to access data of the mobile phone 230 by using the tablet 210. A user may need to create some content on the tablet 210, for example, edit a manuscript that requires illustrations or edit a video. The user may enter an interface for accessing data between devices through an interface of an application, for example, a notebook application or a social application, to obtain data from another device like the mobile phone 230.

After communication connection is established between the mobile phone 230 and the tablet 210, the data middle platform 2 can synchronize album information in a gallery application on the tablet 210, such as an album cover, an album name, a quantity of multimedia resources included in an album, and thumbnails of multimedia resources included in the album to the data middle platform 1. After the data middle platform 1 receives the album information on the tablet 210, a gallery application or another application on the mobile phone 230 can obtain and display the album information on the tablet 210 by accessing the data middle platform 1. For example, the album on the tablet 210 is displayed on an album page in the gallery application, and the thumbnails and the like of the multimedia resources in the album on the tablet 210 are displayed on a grid page.

Certainly, another application on the mobile phone 230 can also access the gallery application on the mobile phone 230, to view local multimedia resources on the mobile phone 230.

In addition, when the gallery application or the another application on the mobile phone 230 needs to obtain more picture information on the gallery application on the tablet 210, for example, original picture information of various multimedia resources, the gallery application or the another application on the mobile phone 230 can request more picture information from the data middle platform 1 by accessing the data middle platform 1. The data middle platform 1 can request, by using the data middle platform 2, the gallery application on the tablet 210 to obtain more picture information. Finally, the data middle platform 2 may synchronize the obtained more picture information to the data middle platform 1. After receiving the more picture information on the tablet 210, the data middle platform 1 may feed back the more picture information to the gallery application or the another application on the mobile phone 230. In this way, the gallery application or the another application on the mobile phone 230 can make a response based on the more picture information, for example, display a full picture, play back a dynamic picture, play back a video, or save/copy a multimedia resource.

It should be noted that a process in which the tablet 210 accesses the multimedia resource on the mobile phone 230 is also similar. For example, the tablet 210 may further include another application. The gallery application or another application on the tablet 210 may also obtain, by accessing the data middle platform 2, information (for example, album information or more picture information) of the multimedia resource on the mobile phone 230 synchronized from the data middle platform 1 to the data middle platform 2, and then make a response based on the obtained information of the multimedia resource, such as displaying or playing back.

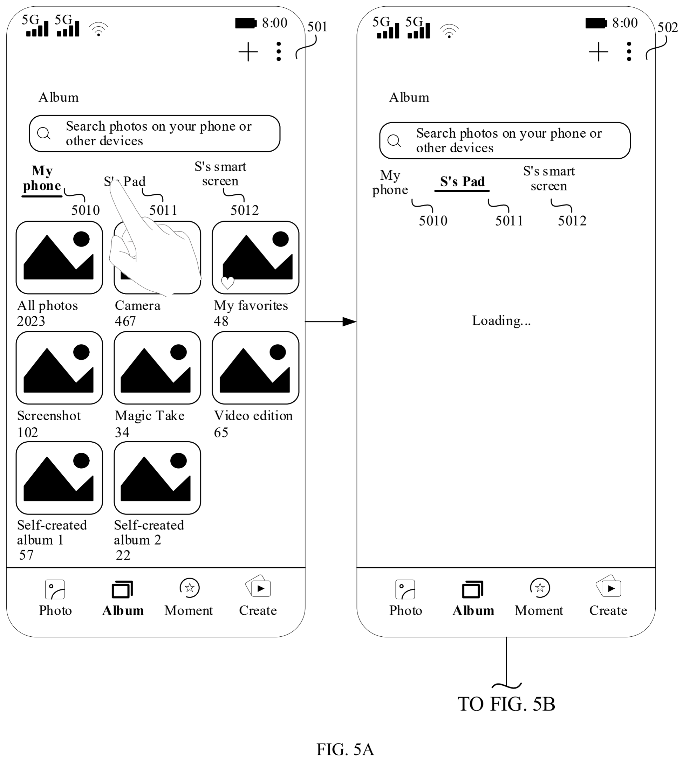

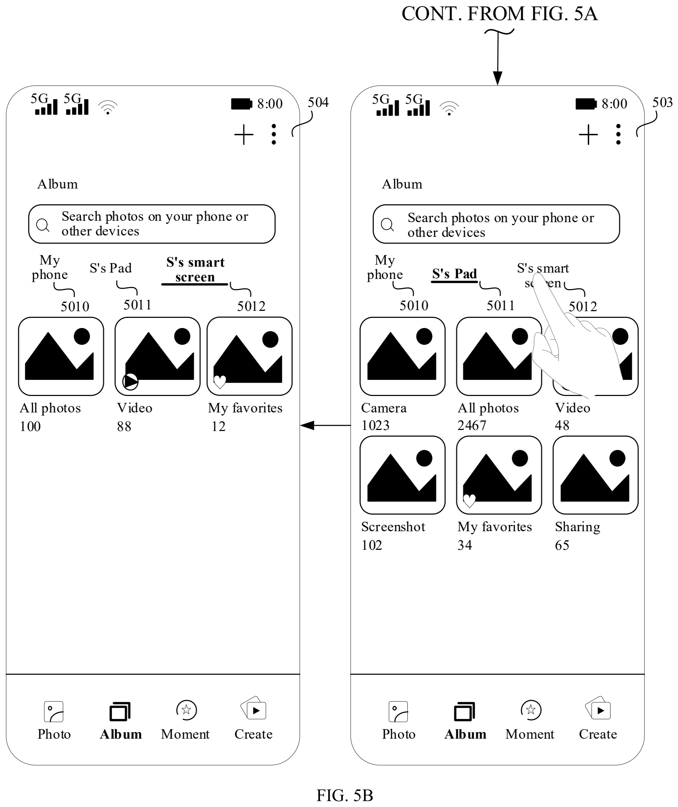

The multimedia resource access method provided in embodiments of this application may be applied to the electronic devices in the communication system. Any electronic device in the plurality of electronic devices can access multimedia resources on other electronic devices in the plurality of electronic devices, and can flexibly switch from accessing a multimedia resource on one electronic device in the other electronic devices to accessing a multimedia resource on another electronic device in the other electronic devices. For details, refer to related descriptions of accessing a multimedia resource on another electronic device in FIG. 5A and FIG. 5B below.

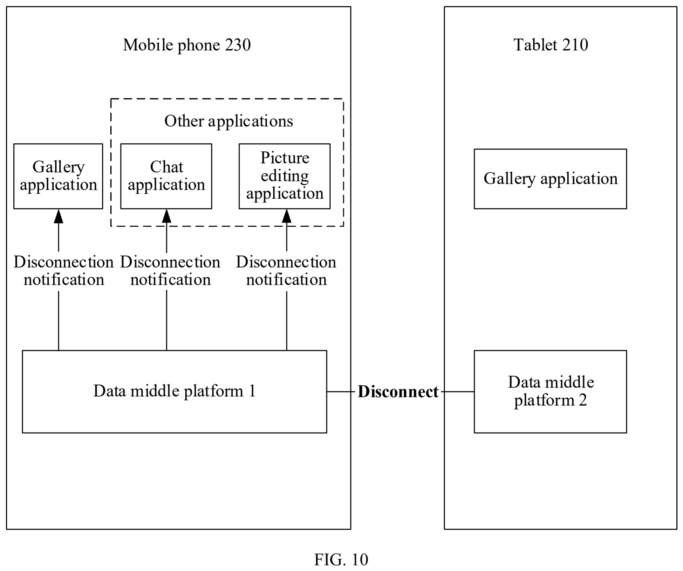

Further, any electronic device in the plurality of electronic devices can further flexibly access a multimedia resource on another electronic device based on a connection situation between the electronic device and the another electronic device in the plurality of electronic devices. For details, refer to related descriptions of disconnection scenarios in FIG. 10 to FIG. 14 below.

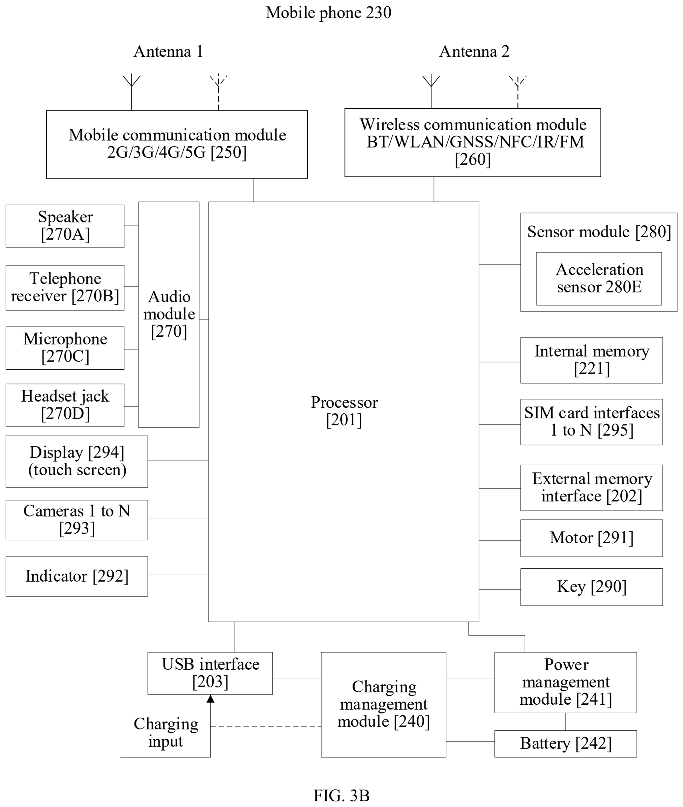

A hardware structure of any electronic device in the plurality of electronic devices is described below by using the mobile phone 230 as an example. As shown in FIG. 3B, the mobile phone 230 may specifically include: a processor 201, an external memory interface 202, an internal memory 221, a universal serial bus (universal serial bus, USB) interface 203, a charging management module 240, a power management module 241, a battery 242, an antenna 1, an antenna 2, a mobile communication module 250, a wireless communication module 260, an audio module 270, a speaker 270A, a telephone receiver 270B, a microphone 270C, a headset jack 270D, a sensor module 280 (including, for example, a pressure sensor 280E), a key 290, a motor 291, an indicator 292, a camera 293, a display 294, a subscriber identification module (subscriber identification module, SIM) card interface 295, and the like.

It may be understood that the structure illustrated in this embodiment does not constitute a specific limitation on the mobile phone 230. In some other embodiments, the mobile phone 230 may include more or fewer components than those shown in the figure, or some components may be combined, or some components may be split, or components are arranged in different manners. The components shown in the figure may be implemented by hardware, software, or a combination of software and hardware.

The processor 201 may include one or more processing units. For example, the processor 201 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The charging management module 240 is configured to receive charging input from a charger. The charger may be a wireless charger or a wired charger. The charging management module 240 may further supply power to the electronic device through the power management module 241 while charging the battery 242.

The power management module 241 is configured to connect the battery 242, the charging management module 240, and the processor 201. The power management module 241 receives input from the battery 242 and/or the charging management module 240, to supply power to the processor 201, the internal memory 221, an external memory, the display 294, the camera 293, the wireless communication module 260, and the like. In some embodiments, the power management module 241 and the charging management module 240 may be arranged in a same device.

A wireless communication function of the mobile phone 230 may be implemented by using the antenna 1, the antenna 2, the mobile communication module 250, the wireless communication module 260, the modem processor, the baseband processor, and the like.

The mobile communication module 250 may provide a wireless communication solution like 2G/3G/4G/5G applied to the mobile phone 230. The wireless communication module 260 may provide wireless communication solutions applied to the mobile phone 230, including WLAN (for example, a (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC), an infrared (infrared, IR) technology, and the like.

In some embodiments, the mobile phone 230 can establish a magic ring and transmit data with another electronic device (like the tablet 210) through the wireless communication module 260.

The mobile phone 230 implements a display function by using the GPU, the display 294, the application processor, and the like. The GPU is a microprocessor for image processing and is connected to the display 294 and the application processor. The GPU is configured to perform mathematical and geometric calculation for graphics rendering. The processor 201 may include one or more GPUs that execute program instructions to generate or change display information.

The mobile phone 230 can implement a photographing function by using the ISP, the camera 293, the video codec, the GPU, the display 294, the application processor, and the like. The ISP is configured to process data fed back by the camera 293. The camera 293 is configured to capture a still picture or a video. In some embodiments, the mobile phone 230 may include one or N cameras 293, where N is a positive integer greater than 1.

The external memory interface 202 may be configured to be connected to an external storage card like a Micro SD card, to expand a storage capability of the mobile phone 230. The external storage card communicates with the processor 201 through the external memory interface 202, to implement a data storage function. For example, files such as music and a video are stored in the external storage card.

The internal memory 221 may be configured to store computer-executable program code. The executable program code includes instructions. The processor 201 runs the instructions stored in the internal memory 221, to perform various function applications and data processing of the mobile phone 230. For example, in this embodiment of this application, the processor 201 may execute the instructions stored in the internal memory 221. The internal memory 221 may include a program storage region and a data storage region.

In some embodiments, a data storage function of the data middle platform in the mobile phone 230 is implemented by the internal memory 221.

The mobile phone 230 can implement an audio function by using the audio module 270, the speaker 270A, the telephone receiver 270B, the microphone 270C, the headset jack 270D, the application processor, and the like, for example, implement a music playback function and a recording function.

The key 290 includes a power-on key, a volume key, and the like. The key 290 may be a mechanical key, or may be a touch key. The motor 291 may generate a vibration prompt. The motor 291 may be configured to provide an incoming call vibration prompt, or may be configured to provide touch vibration feedback. The indicator 292 may be an indicator light, and may be configured to indicate a charging status, a power change, a message, a missed incoming call, a notification, and the like. The SIM card interface 295 is configured to connect to a SIM card. The SIM card may be inserted into the SIM card interface 295 or plugged from the SIM card interface 295, to come into contact with or be separated from the mobile phone 230. The mobile phone 230 may support one or N SIM card interfaces, where N is a positive integer greater than 1. The SIM card interface 295 may support a Nano SIM card, a Micro SIM card, a SIM card, and the like.

In addition, a software architecture of the electronic device may be a layered architecture, an event-driven architecture, a microkernel architecture, a microservice architecture, or a cloud architecture. This is not specifically limited in embodiments of this application.

It may be understood that only after the electronic device enables a file sharing permission, the electronic device can share a multimedia resource in a gallery thereof with another electronic device.

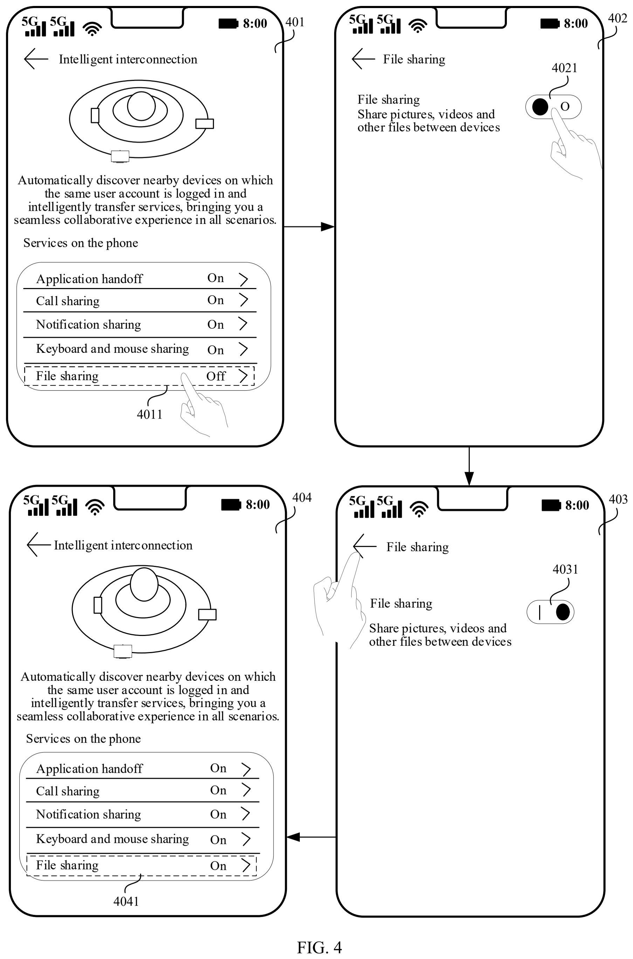

For example, the mobile phone 230 may display an interface 401 shown in FIG. 4. The interface 401 is a setting interface of intelligent interconnection. The interface 401 includes various setting items of an intelligent interconnection service, such as setting items of application handoff, call sharing, notification sharing, and keyboard and mouse sharing, and further includes a setting item 4011 of file sharing. Text "Off" is displayed at the setting item 4011 of file sharing, indicating that the file sharing permission is not currently enabled. The mobile phone 230 may display an interface 402 in FIG. 4 in response to a tap operation of the user for the setting item 4011 of file sharing. The interface 402 is a setting interface of file sharing. The interface 402 includes a switch 4021 for file sharing. The mobile phone 230 may enable the file sharing permission in response to a tap operation of the user for the switch 4021. For example, after enabling the file sharing permission, the mobile phone 230 may display an interface 403 shown in FIG. 4. The interface 403 is also a setting interface of file sharing. Different from the interface 402, a switch 4031 for file sharing on the interface 403 is in an on state. Subsequently, the mobile phone 230 may display an interface 404 in response to a return operation of the user for the interface 403. The interface 404 is also a setting interface of intelligent interconnection. Different from the interface 401, text "On" is displayed at a setting item 4041 of file sharing on the interface 404, indicating that the file sharing permission is currently enabled.

Another electronic device (for example, the tablet 210 or the smart screen 220) may also enable a file sharing permission according to a process similar to that in FIG. 4, and details are not described herein again.

Currently, the file sharing permission of the electronic devices may alternatively be enabled by default. In this case, the foregoing process of enabling the file sharing permission may be omitted.

The solution of this application is specifically described below by using an example of accessing multimedia resources on the tablet 210 and the smart screen 220 by the mobile phone 230.

When the tablet 210 and the smart screen 220 enable the file sharing permission, the mobile phone 230 can access the multimedia resources on the tablet 210 and the smart screen 220 locally. Specifically, the mobile phone 230 may access the multimedia resources on the tablet 210 and the smart screen 220 through the album page (also referred to as a first interface) in the gallery application, or the mobile phone 230 may access the multimedia resources on the tablet 210 and the smart screen 220 by using a picture selector (also referred to as a picture selector or a photo selector) in another application (for example, the chat application or the picture editing application) other than the gallery application. Details are described separately below.

For example, the mobile phone 230 may display an interface 501 shown in FIG. 5A and FIG. 5B. The interface 501 is the album page in the gallery application. The interface 501 not only includes an album on the mobile phone 230, but also includes options corresponding to the tablet 210 and the smart screen 220 that are discovered by the mobile phone 230. For example, the option corresponding to the tablet 210 is "S's Pad" 5011 on the interface 501, and the option corresponding to the smart screen 220 is "S's smart screen" 5012 on the interface 501. On the album page, an option of each electronic device may be used to trigger to access a multimedia resource on the electronic device. In other words, the option of each electronic device is an entry for accessing multimedia resources between devices.

Still refer to FIG. 5A and FIG. 5B. The mobile phone 230 may establish communication connection with the tablet 210 in response to a selection operation (for example, a tap operation) of the user for "S's Pad" 5011 on the interface 501, and transmit album information on the tablet 210 through the established communication connection, such as an album cover, an album name, a quantity of multimedia resources included in an album, and thumbnails of multimedia resources included in the album. For example, in processes of establishing the communication connection and transmitting the album information, the mobile phone 230 may display an interface 502 shown in FIG. 5A and FIG. 5B. The interface 502 includes text "Loading..." to prompt the user to wait. After transmission of the album information ends, the mobile phone 230 may display an interface 503 shown in FIG. 5A and FIG. 5B. The interface 503 includes preview information of the album on the tablet 210, for example, preview information of the album like "All photos", "Camera", and "My favorites". The preview information includes an album name, an album cover, and a quantity of multimedia resources in the album. For example, a number below the album name indicates a quantity of multimedia resources included in a corresponding album on the tablet 210. Subsequently, the mobile phone 230 can access multimedia resources such as pictures and videos in albums on the tablet 210.

In practice, if it takes very short time to establish the connection and transmit the album information, an interface prompting the user to wait may not be displayed, for example, the interface 502 may not be displayed.

On the album page, the mobile phone 230 may always display an option (also referred to as a first option) "My phone" (also referred to as a first device) and an option (also referred to as a second option, a third option, ..., or the like) of another device (also referred to as a second device, a third device, ..., or the like), and display preview information of an album on a device corresponding to a currently selected option. In this way, on the album page, it can be convenient to flexibly switch from accessing a local multimedia resource to accessing a multimedia resource on another device.

Still refer to FIG. 5A and FIG. 5B. After the mobile phone 230 displays the interface 503, the mobile phone 230 may establish connection with the smart screen 220 in response to a selection operation of the user for "S's smart screen" 5012 on the interface 503, and transmit album information on the smart screen 220 through the established communication connection. After transmission of the album information ends, the mobile phone 230 may display an interface 504 shown in FIG. 5A and FIG. 5B. The interface 504 includes preview information of an album on the smart screen 220, for example, preview information of the album like "All photos", "Video", and "My favorites". Similarly, the preview information includes an album name, an album cover, and a quantity of multimedia resources in the album. For example, a number below the album name indicates a quantity of multimedia resources included in a corresponding album on the smart screen 220. Subsequently, the mobile phone 230 can access multimedia resources such as pictures and videos in albums on the smart screen 220.

Clearly, on the interface 501 to the interface 504, an option (for example, "Local" 5010) of a local device, an option ("S's Pad" 5011) of the tablet 210, and an option ("S's smart screen" 5012) of the smart screen 220 are always included. In addition, when the currently selected option is the option of the local device, preview information of an album on the local device is displayed on the album page (as shown in the interface 501). When the currently selected option is the option of the tablet 210, the preview information of the album on the tablet 210 is switched to be displayed on the album page (as shown in the interface 503). When the currently selected option is the option of the smart screen 220, the preview information of the album on the smart screen 220 is switched to be displayed on the album page (as shown in the interface 504).

For ease of description, a region that is on the album page and that displays the option "My phone" and the option of another device may be referred to as a first region, and a region that displays the preview information of the album may be referred to as a second region.

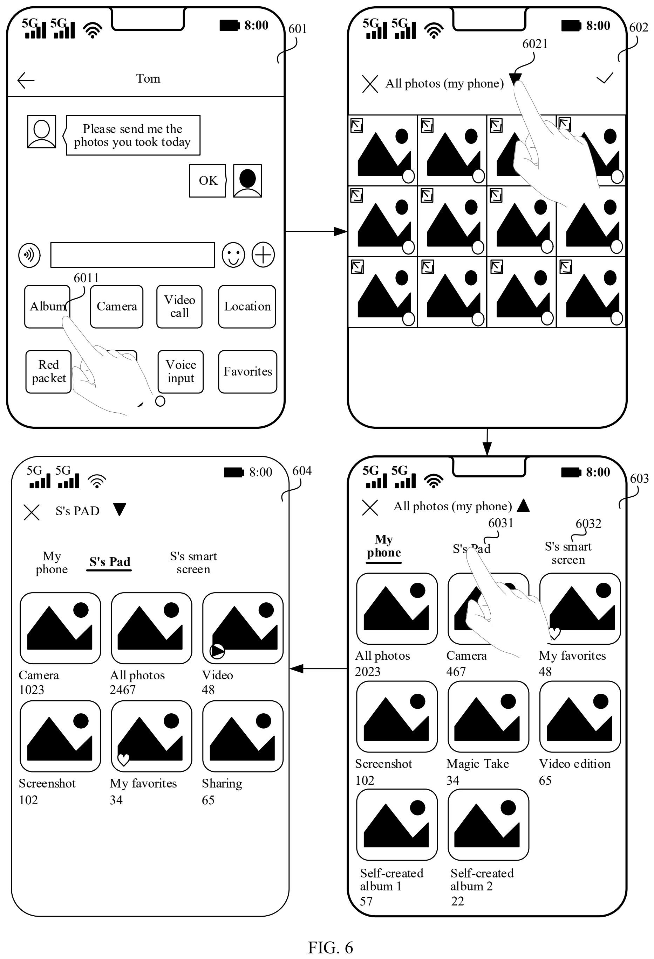

For another example, the mobile phone 230 may display an interface 601 shown in FIG. 6. The interface 601 is a dialog interface with Tom in a chat application. The interface 601 includes "Album" 6011. The mobile phone 230 may display an interface 602 shown in FIG. 6 in response to a selection operation of the user for "Album" 6011. The interface 602 is an interface of a picture selector in the chat application. The interface 602 includes thumbnails of pictures on the mobile phone 230. The mobile phone 230 may display an interface 603 (also referred to as a first interface) shown in FIG. 6 in response to an operation of showing more devices, like tapping an inverted triangle 6021 on a right side of "My phone" on the interface 602, and the interface 603 is also an interface of the picture selector. However, different from the interface 602, the interface 603 further includes options corresponding to the tablet 210 and the smart screen 220 that are discovered by the mobile phone 230. For example, the option corresponding to the tablet 210 is "S's Pad" 6031 on the interface 603, and the option corresponding to the smart screen 220 is "S's smart screen" 6032 on the interface 603.

Still refer to FIG. 6. The mobile phone 230 may establish communication connection with the tablet 210 in response to a selection operation (for example, a tap operation) of the user for "S's Pad" 6031 on the interface 603, and transmit album information on the tablet 210 through the established communication connection. Similarly, in processes of establishing the communication connection and transmitting the album information, the mobile phone 210 may alternatively prompt "Loading..." (this process is not shown in FIG. 6). After obtaining the album information of the tablet 210, the mobile phone 230 may display an interface 604 shown in FIG. 6. The interface 604 includes albums on the tablet 210, such as "All photos", "Camera", and "My favorites". Subsequently, the user may access, in the mobile phone 230, multimedia resources such as pictures and videos in albums on the tablet 210.

Unless otherwise specified, the following descriptions are mainly described by using an example of accessing multimedia resources on the tablet 210 and the smart screen 220 through an album page in a gallery application. However, the following embodiment using the gallery application as an example may be combined with content of another embodiment, for example, combined with the embodiment shown in FIG. 6.

When the mobile phone 230 establishes the communication connection with the tablet 210 or the smart screen 220, the connection may fail. In some embodiments, after the mobile phone 230 fails in establishing the communication connection with the tablet 210 or the smart screen 220, the mobile phone 230 may display a reason for the connection failure. The reason for the failure includes that a communication channel is being occupied by another service (for example, a "keyboard and mouse sharing" service), that the tablet 210 or the smart screen 220 and the mobile phone 230 are no longer located in a same network, or the like.

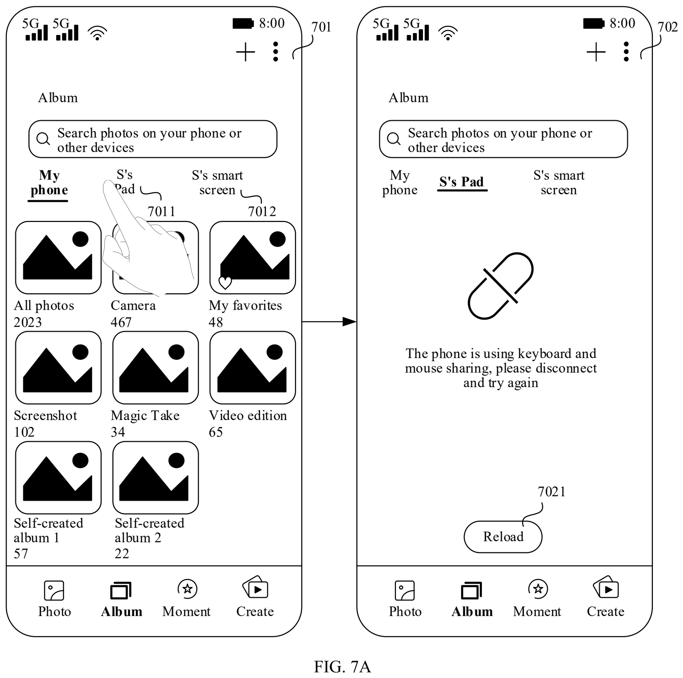

For example, the mobile phone 230 may display an interface 701 shown in FIG. 7A. The interface 701 includes an option "S's Pad" 7011 of the tablet 210 and an option "S's smart screen" 7012. When the mobile phone 230 is using the "keyboard and mouse sharing" service, the mobile phone 230 may display an interface 702 shown in FIG. 7A in response to a selection operation of the user for "S's Pad" 7011 on the interface 701. The interface 702 is an interface for prompting a connection failure. The interface 702 includes prompt text "The phone is using keyboard and mouse sharing, please disconnect and try again". Moreover, the interface 702 further includes a reconnection control, for example, "Reload" 7021, and the control is configured to trigger the mobile phone 230 to reestablish connection with the tablet 210.

It may be understood that the mobile phone 230 may be connected to one or more devices at the same time. Certainly, a quantity of devices connected to the mobile phone 230 at the same time is limited. For example, at most a first quantity of devices may be connected at the same time. After a quantity of devices connected to the mobile phone 230 reaches the first quantity, the mobile phone 230 needs to disconnect from a connected device before establishing connection with another device in response to a selection operation of the user for an option (also referred to as a second option) of another device (which may also be referred to as a second device).

In an example scenario, the mobile phone 230 is connected to one or more devices at the same time, to be specific, a data transmission link is established between the mobile phone 230 and the one or more devices, and the link is not disconnected.

The mobile phone 230 may prompt, through a connection configuration window (also referred to as a first window), the user to disconnect from a connected device (also referred to as a fourth device), and provide a selection control through the connection configuration window for the user to select the disconnected device.

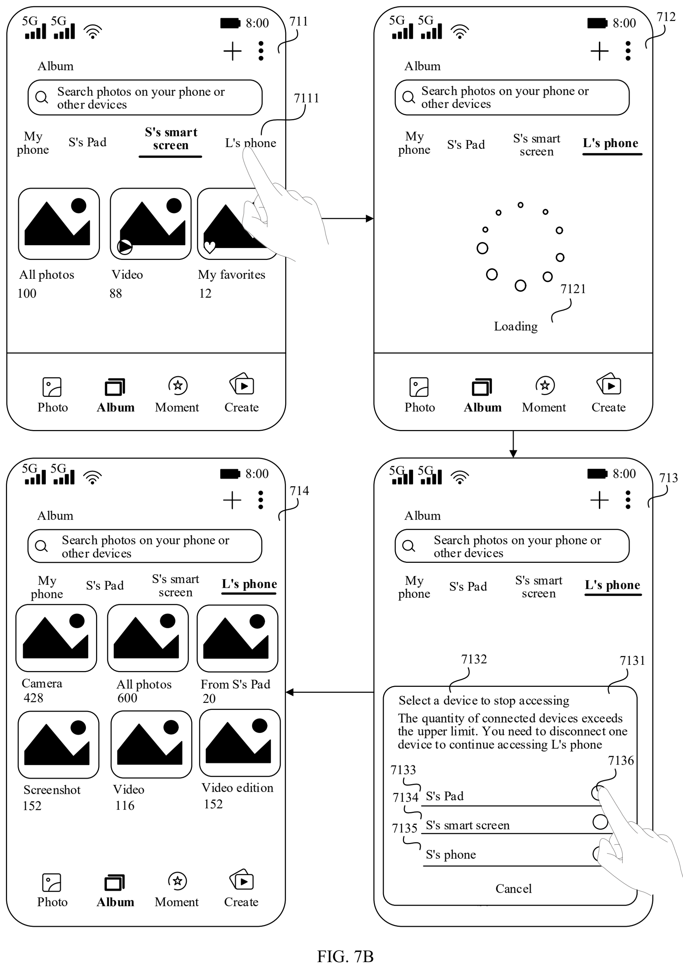

In an example in which the first quantity is 3, the mobile phone 230 may be connected to three devices at the same time. After the mobile phone 230 establishes connection with the three devices (including, for example, the tablet 210, the smart screen 220, and a mobile phone 710), the mobile phone 230 may display an interface 711 shown in FIG. 7B. The interface 711 is an album page. The interface 711 includes an option "L's phone" 7111 of another mobile phone (for example, denoted as a mobile phone 720) with which the mobile phone 230 has not established connection. The mobile phone 230 may display an interface 712 shown in FIG. 7B in response to a selection operation (for example, a tap operation) of the user for "L's phone" 7111 on the interface 711. The interface 712 includes a prompt "Loading" 7121. In a process of displaying the interface 712, the mobile phone 230 attempts to establish connection with the mobile phone 720. In a connection attempting process, the mobile phone 230 may detect that a quantity of devices currently connected to the mobile phone 230 reaches three. In this scenario, the mobile phone 230 may display an interface 713 shown in FIG. 7B. The interface 713 includes a connection configuration window 7131.

For example, the connection configuration window 7131 may be used to select a device that needs to be disconnected from. The connection configuration window 7131 includes prompt information 7132. The prompt information 7132 is used to prompt the user that the quantity of devices connected to the mobile phone 230 reaches an upper limit, and a connected device needs to be disconnected before access is performed on another device like the mobile phone 720.

In addition, the connection configuration window 7131 further includes options of connected devices and corresponding selection controls. The options of the connected devices are in one-to-one correspondence with the selection controls. For example, the connection configuration window 7131 includes an option "S's Pad" 7133 of the tablet 210, an option "S's smart screen" 7134 of the smart screen 220, an option "S's phone" 7135 of the mobile phone 710, and selection controls corresponding to the options, for example, a selection control of the tablet 210 is a control 7136.

Still refer to FIG. 7B. In response to a tap operation of the user for the control 7136, the mobile phone 230 may determine that the user instructs to disconnect from the tablet 210 (that is, receive a disconnection operation), and the mobile phone 230 may disconnect from the tablet 210. After disconnecting from the tablet 210, the mobile phone 230 establishes connection with the mobile phone 720, for example, establishes a data transmission link with the mobile phone 720. Then, the mobile phone 230 obtains information, such as album information, of a multimedia resource on the mobile phone 720 from the mobile phone 720 through the data transmission link. Then, the mobile phone 230 may display an interface 714 shown in FIG. 7B. The interface 714 displays preview information of an album on the mobile phone 720. Subsequently, the mobile phone 230 can access multimedia resources such as pictures and videos in albums on the mobile phone 720.

After the mobile phone 230 disconnects from a connected device (such as the tablet 210 in the example shown in FIG. 7B), the mobile phone 230 may establish connection with the disconnected device again in response to a selection operation of the user for an option of the disconnected device again. Similarly, before the connection is established, if a quantity of connected device exceeds the upper limit, the mobile phone 230 also needs to first disconnect from a connected device. For details, refer to descriptions in FIG. 7B, and details are not described herein again.

The connection configuration window further includes a cancel control. The mobile phone 230 may continue to maintain the connection with the connected device in response to a tap operation of the user for the cancel control, but not establish connection with another device.

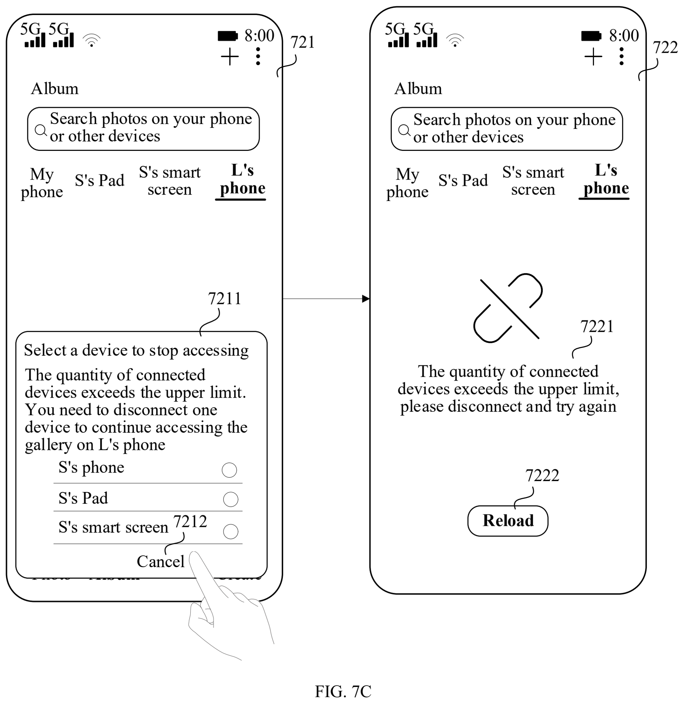

For example, after the mobile phone 230 detects that the quantity of devices currently connected to the mobile phone 230 reaches the upper limit, the mobile phone may display an interface 721 shown in FIG. 7C. The interface 721 includes a connection configuration window 7211, and the connection configuration window 721 includes a cancel control 7212. The mobile phone 230 may display an interface 722 shown in FIG. 7C in response to a tap operation of the user for the cancel control 7212. The interface 722 includes a prompt 7221. The prompt 7221 includes text "The quantity of connected devices exceeds the upper limit, please disconnect and try again", to prompt that the quantity of connected devices exceeds the upper limit.

In addition, the interface 722 may further include a reload control 7222. In response to a tap operation of the user for the reload control 7222, the mobile phone 230 may pop up the connection configuration window again, for example, display the interface 721.

In practice, there may be a large quantity of or a small quantity of a plurality of electronic devices in a same magic ring. For example, there is a small quantity of a plurality of electronic devices, for example, two or three. Alternatively, there is a large quantity of a plurality of electronic devices, for example, more than three. However, options of electronic devices that can be displayed on an album page at the same time are limited. Therefore, on the album page, the mobile phone 230 may display the options of the electronic device (such as the tablet 210 and the smart screen 220) in sequence according to a sequence of discovery time from earliest to most recent, so that the options of the electronic device are regularly arranged according to the discovery time, thereby facilitating the user to search for a corresponding option.

It should be noted that, before the album page is displayed, all electronic devices discovered by the mobile phone 230 are considered to be discovered at the same time. For example, electronic devices discovered in a process in which the mobile phone 230 displays a desktop or a photo page (where the photo page includes a local photo, and may also be referred to as a sixth interface) in a gallery application are all considered to be discovered at the same time. In a process of displaying the album page, electronic devices discovered by the mobile phone 230 are discovered in a sequential order. Certainly, in the process of displaying the album page, the mobile phone 230 may alternatively discover at least two electronic devices at the same time.

Further, when displaying the album page, the mobile phone 230 may sort the electronic devices discovered at the same time according to preset device types, and display options of the electronic devices discovered at the same time, so that the options of the electronic devices discovered at the same time may alternatively be arranged in sequence according to device types, thereby further enabling the user to search for a corresponding option from a plurality of electronic devices discovered at the same time. The device types include a plurality of types: a mobile phone, a tablet, a smart screen, and a PC. The preset device types may be sorted in a sequence of any combination of the plurality of device types. For example, the preset device types are sorted as follows: the mobile phone, the tablet, the PC, and the smart screen.

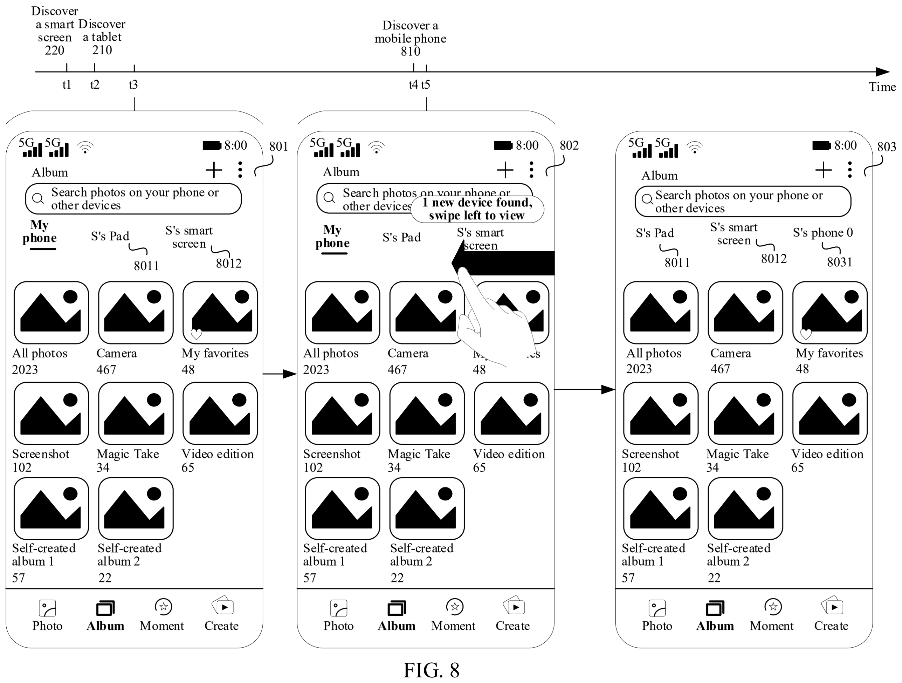

In an example in which the preset device types are sorted as the mobile phone, the tablet, the PC, and the smart screen, before the album page is displayed (for example, in a process of displaying the photo page in the gallery application), at a moment t1, the mobile phone 230 discovers the smart screen 220, and at a moment t2, the mobile phone 230 discovers the tablet 210. In other words, the tablet 210 and the smart screen 220 may be considered to be discovered at the same time. At a moment t3, the mobile phone 230 may display an interface 801 shown in FIG. 8 in response to an operation of entering the album page. The interface 801 is an album page. On the interface 801, an option "S's Pad" 8011 of the tablet 210 is displayed in front of an option "S's smart screen" 8012 of the smart screen 220. In other words, the options of the tablet 210 and the smart screen 220 that are discovered at the same time are displayed in a sequence of the preset device types. After the interface 801 is displayed, at a moment t4, the mobile phone 230 discovers a mobile phone 810. In other words, the mobile phone 230 first discovers the tablet 210 and the smart screen 220, and then discovers the mobile phone 810. At a moment t5 after the mobile phone 810 is discovered, the mobile phone 230 may display an interface 802 shown in FIG. 8. A difference of the interface 802 from the interface 801 is that the interface 802 includes a prompt "1 new device found, swipe left to view". Then, the mobile phone 230 may display an interface 803 in response to a swipe operation of the user from right to left on the interface 802. On the interface 803, an option "S's phone 0" 8031 of the mobile phone 810 is further displayed behind "S's Pad" 8011 and "S's smart screen" 8012. In other words, the options of the tablet 210 and the smart screen 220 that are discovered first are displayed in front of the option of the mobile phone 810 discovered later.

Further, electronic devices discovered at the same time may include electronic devices of a same type. If the electronic devices discovered at the same time include electronic devices of a same type (briefly referred to as devices of a same type), the mobile phone 230 may display options of the devices of the same type according to option names of the devices of the same type. For example, sorting is performed alphabetically by a first letter of the option names.

In the example in which the preset device types are sorted as the mobile phone, the tablet, the PC, and the smart screen, the electronic devices discovered at the same time include the tablet 210 and the smart screen 220, and further include a tablet 820. In this case, when the mobile phone 230 displays options of the tablet 210, the smart screen 220, and the tablet 820, the mobile phone 230 may display the option of the smart screen 220 behind the options of the tablet 210 and the tablet 820. In addition, an option name of the tablet 210 is "S's Pad", and an option name of the tablet 820 is "C's Pad". A first letter of "S's Pad" is S, and a first letter of "C's Pad" is C, with C coming before S. In this case, the mobile phone 230 may display the option of the tablet 810 in front of the option of the tablet 210.

After albums on the tablet 210 (also referred to as a second device) are displayed on the album page, the mobile phone 230 may display a grid page (also referred to as a second interface) of the album in response to an access operation of the user for any album (also referred to as a first album). A thumbnail of a picture or a video in the album is displayed in each grid on the grid page.

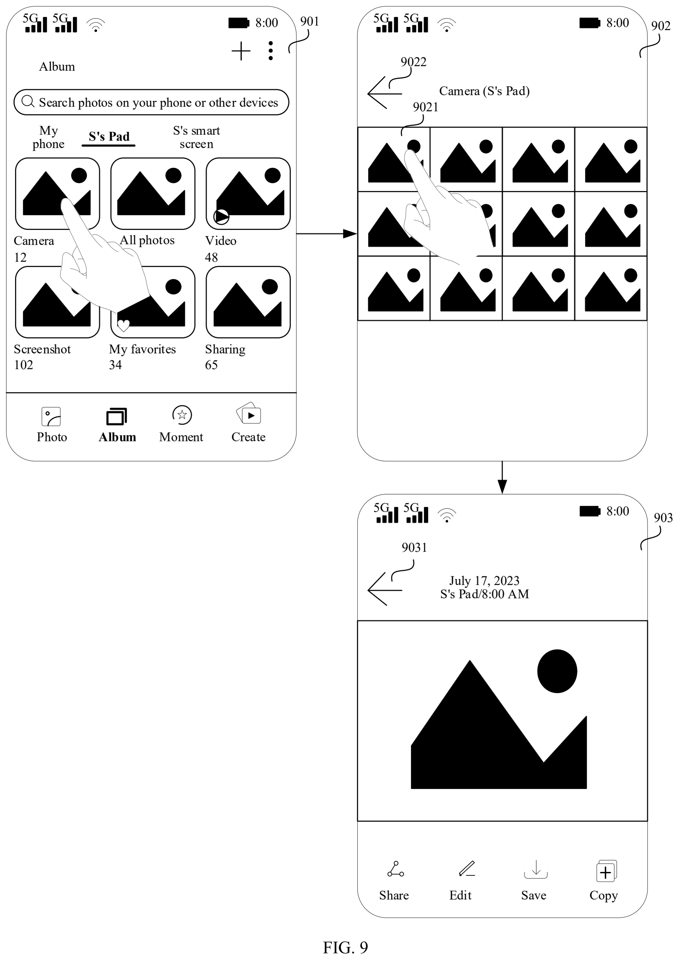

For example, the mobile phone 230 may display an interface 901 shown in FIG. 9. The interface 901 is an album page. The interface 901 includes albums on the tablet 210, such as "All photos", "Camera", and "My favorites". The mobile phone 230 may display an interface 902 in FIG. 9 in response to an access operation (for example, a tap operation) of the user for "Camera". The interface 902 is a grid page of the album. The interface 902 includes thumbnails of multimedia resources such as pictures and videos included in "Camera" of the tablet 210.

After displaying the grid page, the mobile phone 230 may display a full picture page (also referred to as a third interface) of a multimedia resource (also referred to as a first multimedia resource) corresponding to the thumbnail in response to a viewing operation (described below by using a tap operation) of the user for any thumbnail (also referred to as a first thumbnail) on the grid page. For example, the mobile phone 230 may display an interface 903 shown in FIG. 9 in response to a tap operation of the user for a thumbnail 9021 on the interface 902 shown in FIG. 9. The interface 903 includes a multimedia resource corresponding to the thumbnail 9021.

It may be understood that, after the mobile phone 230 displays the multimedia resource corresponding to the thumbnail, the mobile phone 230 may return to the grid page in response to a return operation of the user. In an example in which the return operation is a tap operation for a return key 9031 on the interface 903 shown in FIG. 9, the mobile phone 230 may display the interface 902 shown in FIG. 9 in response to the tap operation of the user for the return key 9031 on the interface 903 shown in FIG. 9.

Then, the mobile phone 230 may return to the album page in response to a return operation of the user for the grid page. In an example in which the return operation is a tap operation for a return key 9022 on the interface 902 shown in FIG. 9, the mobile phone 230 may display the interface 901 shown in FIG. 9 in response to the tap operation of the user for the return key 9022 on the interface 902 shown in FIG. 9.

The foregoing example of FIG. 9 describes a response of the mobile phone 230 to an operation of the user when there is communication connection between the mobile phone 230 and the tablet 210.

However, in some scenarios, the tablet 210 may be disconnected from the mobile phone 230. For example, after the tablet 210 is away from the mobile phone 230, the tablet 210 may be disconnected from the mobile phone 230. After the mobile phone 230 establishes connection with the tablet 210, a data middle platform 1 may detect whether the mobile phone 230 is disconnected from the tablet 210. Refer to FIG. 10. If it is detected that the mobile phone 230 is disconnected from the tablet 210, the data middle platform 1 sends a disconnection notification to a gallery application or another application. The disconnection notification indicates that the gallery application or another application is not allowed to access the data middle platform 1. In this case, after the tablet 210 is disconnected from the mobile phone 230, the gallery application or another application no longer has a permission to access the data middle platform 1, and therefore cannot continue to obtain information of multimedia resources on the tablet 210 from the data middle platform 1. This can ensure data security of the tablet 210.

Especially, when the another application is an application provided by an external manufacturer (which is briefly referred to as an external application or a three-party application like a chat application provided by the external manufacturer) other than a developer of the mobile phone 230, a processing manner shown in FIG. 10 may be used to ensure that after the mobile phone 230 is disconnected from the tablet 210, the external application cannot continue to obtain the information of the multimedia resources on the tablet 210. It may be understood that compared with system applications such as the gallery application and a notebook application, security of the external application is lower. Therefore, when the processing manner shown in FIG. 10 is used, especially for the external application, data security of the tablet 210 can be more effectively protected.

The following still mainly uses the gallery application as an example to describe a response process after disconnection. An implementation process of another application is also the same, only the gallery application below is replaced with the another application, and details are not described herein again.

Further, if the mobile phone 230 is disconnected from the tablet 210 (for example, after the gallery application receives the disconnection notification), the gallery application may further make corresponding responses based on different cases of a currently displayed interface and whether the mobile phone 230 can discover the tablet 210, to ensure that excessive information of the multimedia resources on the tablet 210 is not presented to the user after the tablet 210 is disconnected from the mobile phone 230.

Case 1: The currently displayed interface is an album page in the gallery application, and the album page includes albums on the tablet 210.

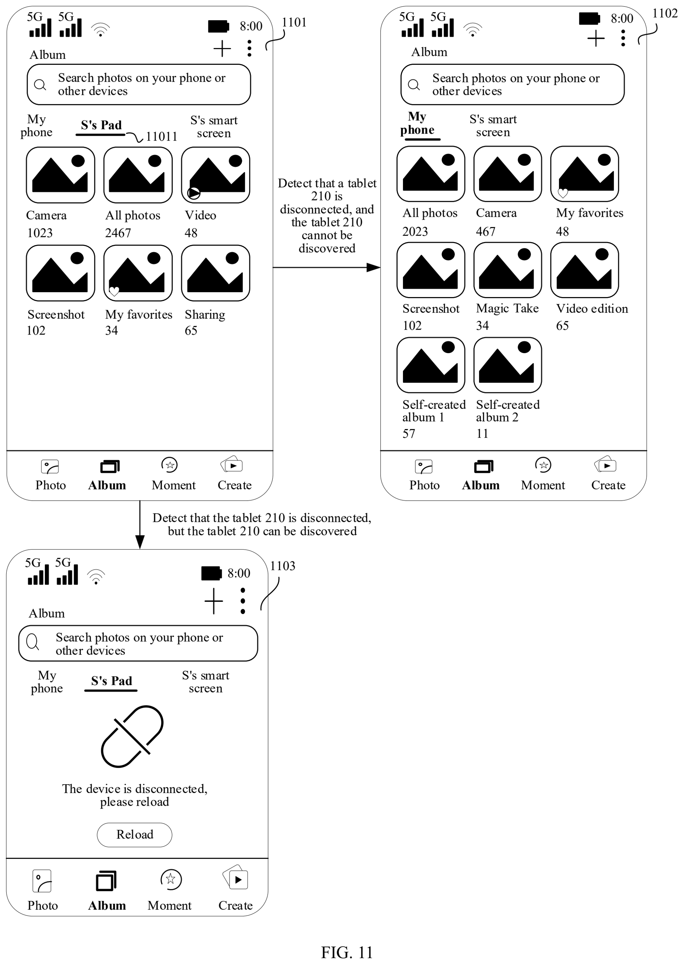

After the mobile phone 230 establishes communication connection with the tablet 210, (a gallery application on) the mobile phone 230 may display an interface 1101 shown in FIG. 11. The interface 1101 is the album page in the gallery application. An option "S's Pad" 11011 of the tablet 210 is currently selected on the interface 1101, and the interface 1101 includes the albums on the tablet 210. In other words, the album page includes the albums on the tablet 210. In a process in which (the gallery application on) the mobile phone 230 displays the interface 1101, the mobile phone 230 is disconnected from the tablet 210. In this case, a cache of the gallery may still store album information of the albums on the tablet 210, and the albums on the tablet 210 can continue to be displayed.

After the mobile phone 230 is disconnected from the tablet 210, if the mobile phone 230 cannot discover the tablet 210, (the gallery application on) the mobile phone 230 may display an interface 1102 shown in FIG. 11 in response to receiving the disconnection notification. The interface 1102 is also an album page, but the interface 1102 no longer includes an option of the tablet 210, and no longer includes the albums on the tablet 210.

After the mobile phone 230 is disconnected from the tablet 210, if the mobile phone 230 can still discover the tablet 210, (the gallery application on) the mobile phone 230 may display an interface 1103 shown in FIG. 11 in response to receiving the disconnection notification. The interface 1103 is also an album page. The interface 1103 includes an option "S's Pad" of the tablet 210, but does not include the albums on the tablet 210, and prompts "The device is disconnected, please reload".

In other words, after it is detected that the mobile phone 230 is disconnected from the tablet 210, the mobile phone 230 does not continue to display the albums on the tablet 210 on the album page, to prevent the user from obtaining information of the albums on the tablet 210.

Case 2: The currently displayed interface is a grid page, and the grid page includes thumbnails of multimedia resources included in an album on the tablet 210.

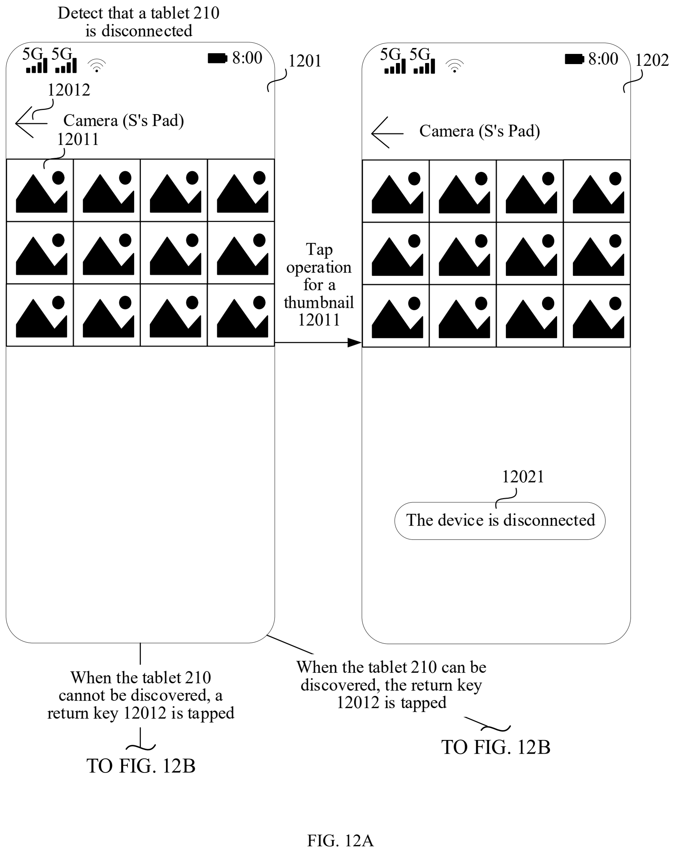

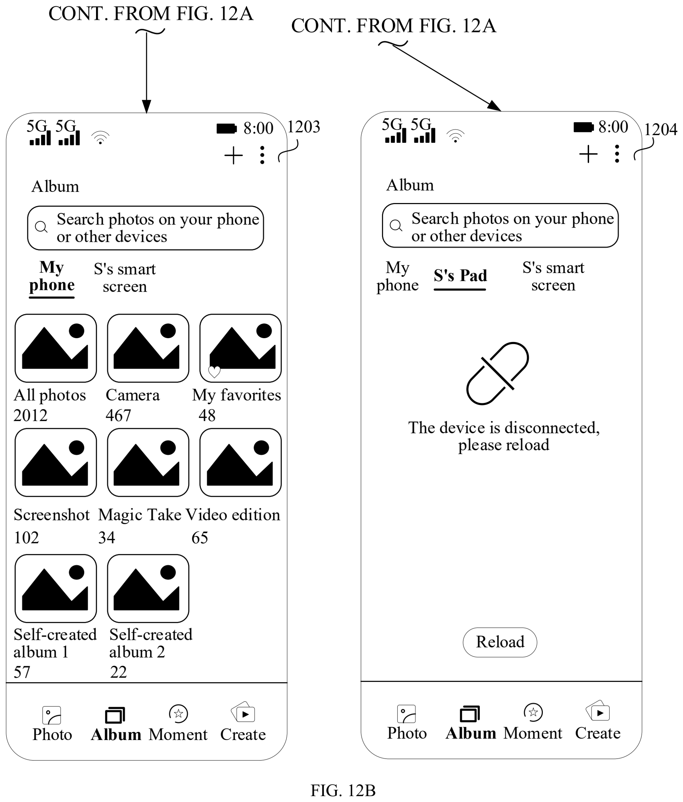

After the mobile phone 230 establishes communication connection with the tablet 210, (a gallery application on) the mobile phone 230 may display an interface 1201 shown in FIG. 12A and FIG. 12B. The interface 1201 is a grid page. The interface 1201 includes thumbnails of multimedia resources in a "Camera" album on the tablet 210, for example, includes a thumbnail 12011. In other words, the grid page includes thumbnails of multimedia resources included in an album of the tablet 210. In a process in which (the gallery application on) the mobile phone 230 displays the interface 1201, the mobile phone 230 is disconnected from the tablet 210. In response to disconnection, (the gallery application on) the mobile phone 230 may continue to display the grid page by using information in a cache of the gallery application, for example, continue to display the interface 1201.

After the mobile phone 230 is disconnected from the tablet 210, in response to a tap operation of the user for the thumbnail 12011 on the interface 1201, (the gallery application on) the mobile phone 230 cannot obtain more picture information corresponding to the thumbnail 12011, and cannot display a full picture page, but displays an interface 1202 shown in FIG. 12A and FIG. 12B. The interface 1202 is also a grid page, and the interface 1202 includes a prompt "The device is disconnected", to prompt that the mobile phone 230 is disconnected from the tablet 210, and more picture information cannot be obtained for displaying.

After the mobile phone 230 is disconnected from the tablet 210, if the mobile phone 230 cannot discover the tablet 210, (the gallery application on) the mobile phone 230 may display an interface 1203 shown in FIG. 12A and FIG. 12B in response to a tap operation of the user for a return key 12012 on the interface 1201. The interface 1203 is an album page, but the interface 1203 does not include the option of the tablet 210, and no longer includes the albums on the tablet 210.

After the mobile phone 230 is disconnected from the tablet 210, if the mobile phone 230 can still discover the tablet 210, (the gallery application on) the mobile phone 230 may display an interface 1204 shown in FIG. 12A and FIG. 12B in response to the tap operation of the user for the return key 12012 on the interface 1201. The interface 1204 is an album page. The interface 1204 includes an option "S's Pad" of the tablet 210, but does not include the albums on the tablet 210, and prompts "The device is disconnected, please reload".

In other words, after it is detected that the mobile phone 230 is disconnected from the tablet 210, the mobile phone 230 does not continue to provide the user with a service of viewing the multimedia resources corresponding to the thumbnails, to prevent the user from obtaining the multimedia resources on the tablet 210.

Case 3. The currently displayed interface is a full picture page, and the full picture page may include a multimedia resource on the tablet 210.

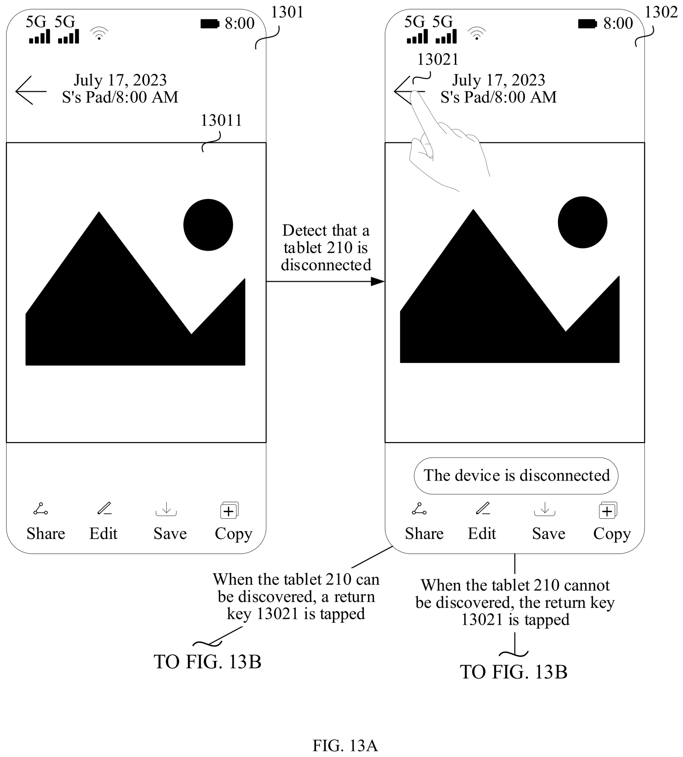

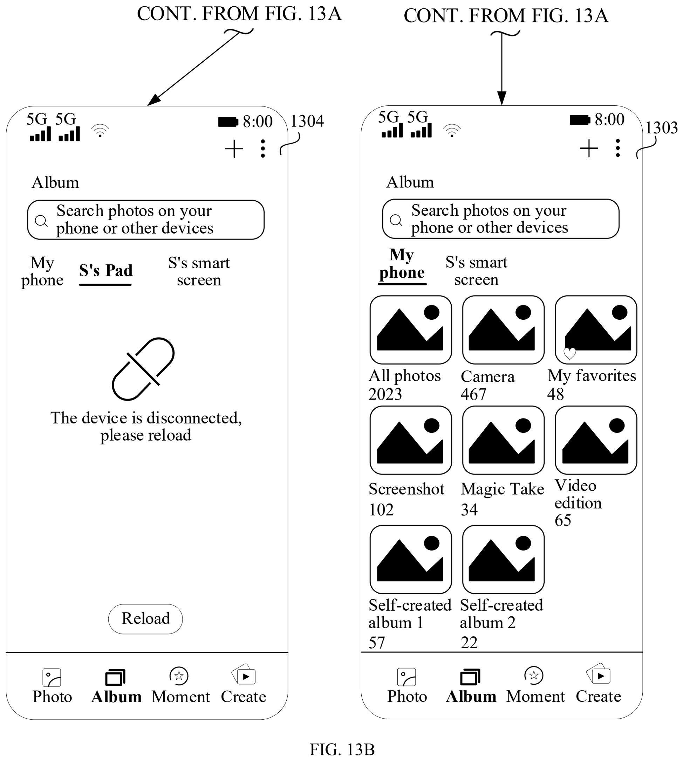

After the mobile phone 230 establishes communication connection with the tablet 210, (a gallery application on) the mobile phone 230 may display an interface 1301 shown in FIG. 13A and FIG. 13B. The interface 1301 is a full picture page. The interface 1301 includes a picture 13011 in "Camera" on the tablet 210. In other words, the full picture page includes a multimedia resource on the tablet 210. In a process in which (the gallery application on) the mobile phone 230 displays the interface 1301, the mobile phone 230 is disconnected from the tablet 210. In response to disconnection, (the gallery application on) the mobile phone 230 may continue to display the full picture page by using information in a cache of the gallery application, but in this case, on the full picture page, there may be a prompt indicating that the device is disconnected. For example, (the gallery application on) the mobile phone 230 may display an interface 1302 shown in FIG. 13A and FIG. 13B. Different from the interface 1301, the interface 1302 includes a prompt "Device disconnected".

After the mobile phone 230 is disconnected from the tablet 210, if the mobile phone 230 cannot discover the tablet 210, in response to a tap operation of the user for a return key 13021 on the interface 1302 (that is, a return operation for the full picture page), (the gallery application on) the mobile phone 230 does not continue to display the grid page by using the information on the cache of the gallery application, that is, does not return to the grid page, but directly returns to the album page (also referred to as a fourth interface), for example, displays an interface 1303 shown in FIG. 13A and FIG. 13B. The interface 1303 is an album page, but does not include an option "S's Pad" of the tablet 210.

After the mobile phone 230 is disconnected from the tablet 210, if the mobile phone 230 can still discover the tablet 210, (the gallery application on) the mobile phone 230 may display an interface 1304 shown in FIG. 13A and FIG. 13B in response to the tap operation of the user for the return key 13021 on the interface 1302. The interface 1304 is an album page. The interface 1304 includes an option "S's Pad" of the tablet 210, but does not include the albums on the tablet 210, and prompts "The device is disconnected, please reload".

In other words, after it is detected that the mobile phone 230 is disconnected from the tablet 210, in response to an operation of returning to the grid page (for example, the tap operation for the return key 13021 on the interface 1302), the mobile phone 230 does not return to the grid page, but directly returns to the album page, and does not provide the albums on the tablet 210 on the album page.

It should be noted that there is a specific delay when the data middle platform 1 detects whether the mobile phone 230 is disconnected from the tablet 210. For example, the data middle platform 1 detects, every two minutes, whether the mobile phone 230 is disconnected from the tablet 210, but the mobile phone 230 is disconnected from the tablet 210 between two detections, in other words, the delay is 1 minute. Within the delay (also referred to as a second moment), the data middle platform 1 does not send the disconnection notification to the gallery application, and the gallery application may continue to access the data middle platform 1, to obtain the information of the multimedia resources on the tablet 210. Therefore, within the delay, the mobile phone 230 may also respond in a same process as before the mobile phone 230 is disconnected from the tablet 210, for example, continue to display the album page including the albums on the tablet 210, continue to enter the grid page to view the thumbnails, and normally return to the grid page from the full picture page.

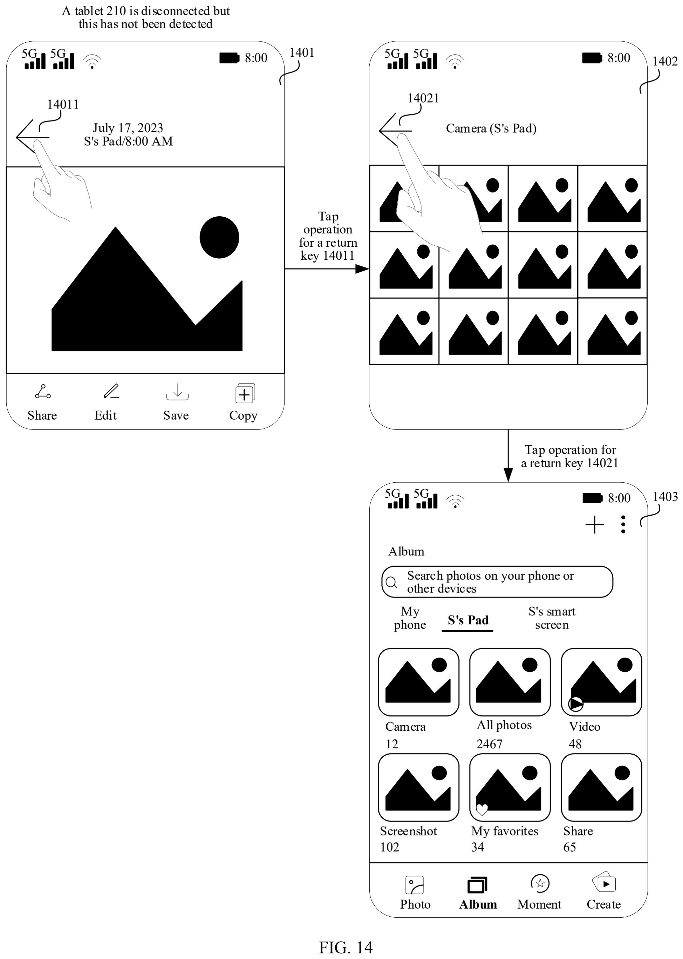

For example, (the gallery application on) the mobile phone 230 may display an interface 1401 shown in FIG. 14. The interface 1401 includes a picture on the tablet 210. In a process of displaying the interface 1401, the mobile phone 230 is disconnected from the tablet 210, but the mobile phone 230 has not detected that the mobile phone 230 is disconnected from the tablet 210. In this case, in response to a tap operation of the user for a return key 14011 on the interface 1401, (the gallery application on) the mobile phone 230 may continue to obtain, from the data middle platform 1 or from the cache of the gallery application, information needed to display the grid page, to display an interface 1402 shown in FIG. 14. The interface 1402 is a grid page, and the interface 1402 includes thumbnails of multimedia resources on "Camera" on the tablet 210. Then, in response to a tap operation of the user for a return key 14021 on the interface 1402, (the gallery application on) the mobile phone 230 may continue to obtain, from the data middle platform 1 or from the cache of the gallery application, information needed to display the album page, to display an interface 1403 shown in FIG. 14. The interface 1403 is an album page, and the interface 1403 includes an option "S's Pad" of the tablet 210 and albums on the tablet 210. In other words, when the mobile phone 230 is disconnected from the tablet 210, but the mobile phone 230 has not detected that the mobile phone 230 is disconnected from the tablet 210, the mobile phone 230 may normally return from the full picture page to the grid page, and further return from the grid page to the album page, and the album page includes the option of the tablet 210 and the albums on the tablet 210.

In other words, only at a moment (for example, denoted as a first moment) after the mobile phone 230 is disconnected from the tablet 210 and the disconnection is detected, the mobile phone 230 may respond according to the foregoing case 1 to case 3.

After the grid page is displayed, in response to a tap operation of the user for any thumbnail on the grid page, the mobile phone 230 may obtain information of a multimedia resource in a manner matching a resource type of the multimedia resource corresponding to the thumbnail and display a full picture page (for example, an interface 1502, an interface 1602, an interface 1702, and an interface 1703 below).

The resource type of the multimedia resource includes a still picture, a dynamic picture (also referred to as a live picture), and a video. The dynamic picture includes a still picture and a segment of video within preset duration (for example, 1.5 seconds) before and after the still picture is captured. Details are described separately below.

### 1. Still picture

The mobile phone 230 may display a full picture of the still picture in response to a tap operation of the user for a thumbnail of the still picture on the grid page.

In some embodiments, the mobile phone 230 obtains full picture information of the still picture from the tablet 210 (by using, for example, the data middle platform 1), and displays the full picture of the still picture based on the full picture information after obtaining the full picture information.

It should be noted that the full picture of the still picture is not an original picture of the still picture, but is a thumbnail having a size larger than that of the thumbnail displayed on the grid page. For example, a thumbnail of a first size is displayed on the grid page, a thumbnail of a second size is displayed on the full picture page, and the first size is smaller than the second size.

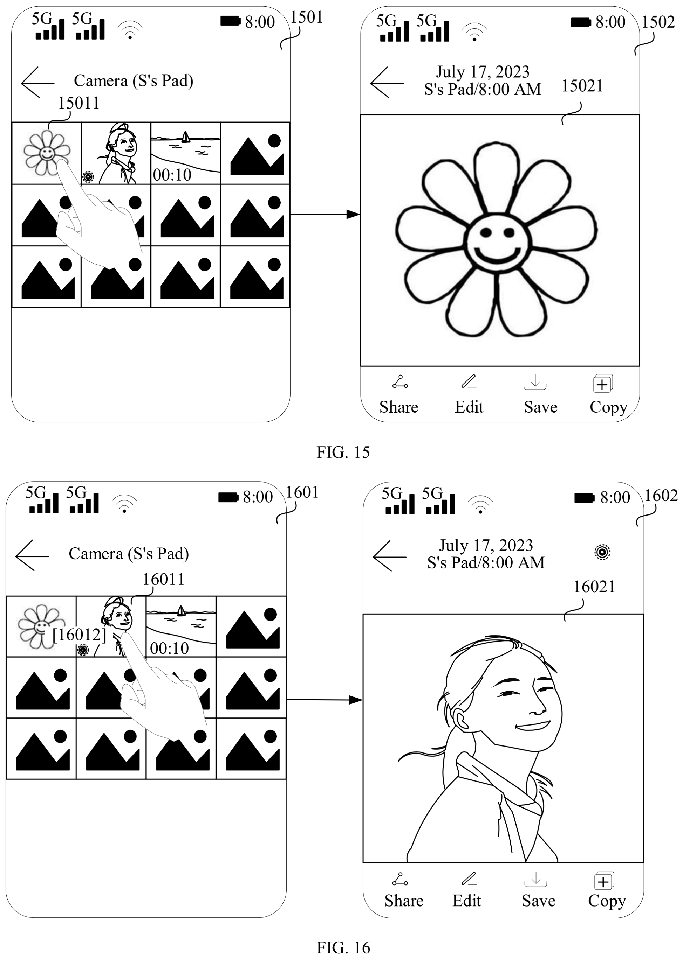

In an example in which the grid page is an interface 1501 shown in FIG. 15, the interface 1501 includes a thumbnail 15011. The thumbnail 15011 is a thumbnail of a still picture. In response to a tap operation of the user for the thumbnail 15011 on the interface 1501, the mobile phone 230 may obtain full picture information corresponding to the thumbnail 15011 on the tablet 210, and after obtaining the full picture information, the mobile phone 230 may display an interface 1502 shown in FIG. 15. The interface 1502 includes a full picture 15021 corresponding to the thumbnail 15011.

In other words, for the still picture, the mobile phone 230 mainly needs to obtain the full picture information of the still picture from the tablet 210 in response to a viewing operation of the user.

### 2. Dynamic picture

The mobile phone 230 may display an original picture of a dynamic picture in response to a tap operation of the user for a thumbnail of the dynamic picture on the grid page. Specifically, the mobile phone 230 may first display an original picture of a still picture in the dynamic picture, and then the mobile phone 230 plays back a video in the dynamic picture in response to a playback operation of the user for the still picture.

In some embodiments, the mobile phone 230 obtains original picture information of the still picture and original picture information of the video that are in the dynamic picture from the tablet 210 (by using, for example, the data middle platform 1). Subsequently, the mobile phone 210 displays the original picture of the still picture based on the original picture information of the still picture, and plays back the video based on the original picture information of the video.

In an example in which the grid page is an interface 1601 shown in FIG. 16, the interface 1601 includes a thumbnail 16011. A lower left corner of the thumbnail 16011 includes an icon 16012 of a dynamic picture, indicating that a multimedia resource corresponding to the thumbnail 16011 is a dynamic picture. In response to a tap operation of the user for the thumbnail 16011 on the interface 1601, the mobile phone 230 may obtain original picture information of a still picture and a video included in a dynamic picture corresponding to the thumbnail 16011.

After obtaining the original picture information of the still picture and the video included in the dynamic picture, the mobile phone 230 may display an interface 1602 shown in FIG. 16. The interface 1602 includes a still picture 16021 of the dynamic picture corresponding to the thumbnail 16011. After displaying the interface 1602, in response to a playback operation (for example, a touch and hold operation) of the user for the still picture 16021 on the interface 1602, the mobile phone 230 may play back, on the interface 1602, a video of the dynamic picture corresponding to the thumbnail 16011.

In other words, for the dynamic picture, the mobile phone 230 obtains the original picture information of the still picture and the video included in the dynamic picture in response to a viewing operation of the user. It may be understood that a data amount of the video (which usually lasts only 2 to 3 seconds) of the dynamic picture is small. Therefore, after receiving the viewing operation of the user, the mobile phone 230 obtains the original picture information. This does not occupy excessive resources. In addition, the still picture and the video in the dynamic picture are an integrity, and the user usually needs to view an overall effect. Therefore, after receiving the viewing operation of the user, the mobile phone 230 obtains the original picture information. This can be convenient for the user to view a complete dynamic picture.

### 3. Video

The mobile phone 230 may display a cover of a video in response to a tap operation of the user for a thumbnail of the video on the grid page. In some embodiments, the mobile phone 230 obtains cover information of the video from the tablet 210 (for example, the data middle platform 1), and displays the cover of the video based on the cover information after obtaining the cover information.

It should be noted that the cover of the video is not an original picture either, but is a thumbnail having a size larger than that of the thumbnail displayed on the grid page.

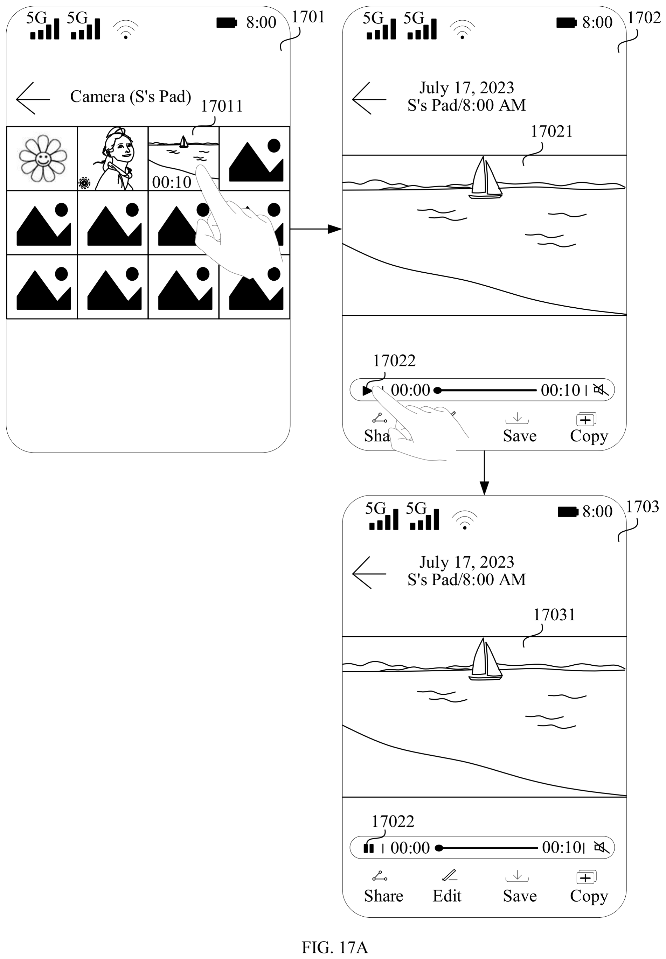

In an example in which the grid page is an interface 1701 shown in FIG. 17A, the interface 1701 includes a thumbnail 17011. A lower left corner of the thumbnail 17011 includes duration "00:10" of a video. In other words, a multimedia resource corresponding to the thumbnail 17011 is a video. In response to a tap operation of the user for the thumbnail 17011 on the interface 1701, the mobile phone 230 may obtain cover information of a video corresponding to the thumbnail 17011, and after obtaining the cover information, the mobile phone 230 may display an interface 1702 shown in FIG. 17A. The interface 1702 includes a cover 17021 of the video corresponding to the thumbnail 17011.

After displaying the cover of the video, the mobile phone 230 may play back the video in response to a playback operation of the user for the video. In some embodiments, the mobile phone 230 obtains original picture information of a video from the tablet 210 (for example, the data middle platform 1), and plays back the video after obtaining the original picture information.

In the example of FIG. 17A, after the mobile phone 230 displays the interface 1702 shown in FIG. 17A, in response to a tap operation of the user for a playback key 17022 on the interface 1702, the mobile phone 230 may obtain original picture information of the video corresponding to the thumbnail 17011 in the tablet 210, and after obtaining the original picture information, the mobile phone 230 may play back the video corresponding to the thumbnail 17011, as shown in an interface 1703 in FIG. 17A, and start to play back a video 17031.

In other words, for the video, the mobile phone 230 first obtains cover information of the video from the tablet 210 in response to a viewing operation of the user, and then the mobile phone 230 further obtains original picture information of the video from the tablet 210 in response to a playback operation of the user for the video. It may be understood that a data amount of the video is large. Therefore, after receiving the viewing operation of the user, the mobile phone 230 first obtains the cover information. This can avoid occupying excessive resources in short time.

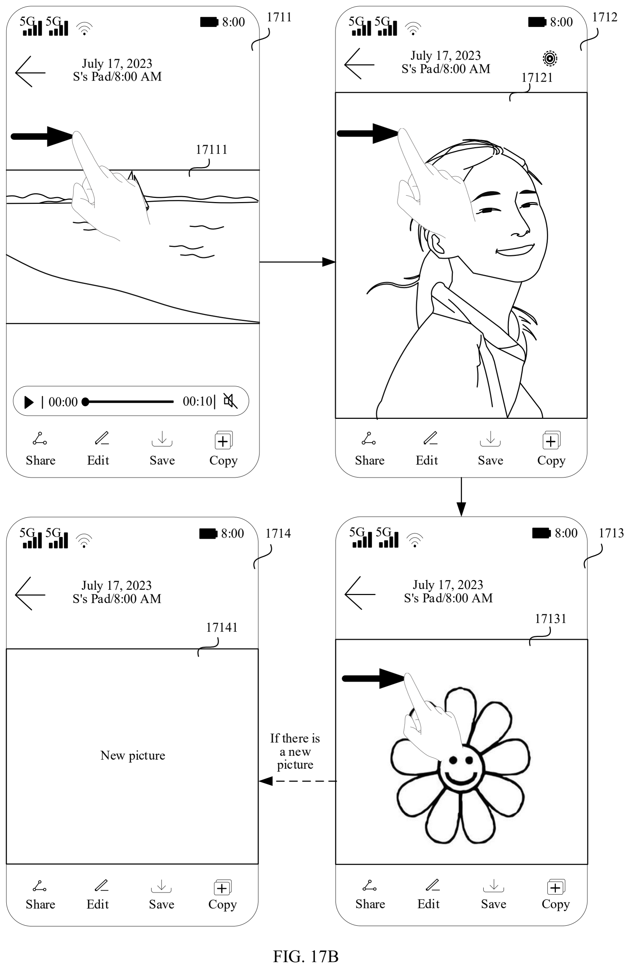

In addition, after displaying the full picture page, the mobile phone 230 may further switch to display different multimedia resources in response to a leftward/rightward swipe operation of the user. In an example of the rightward swipe operation, the mobile phone 230 may display an interface 1711 shown in FIG. 17B. The interface 1711 includes a video 17111 (for example, a video cover). The mobile phone 230 may display an interface 1712 shown in FIG. 17B in response to a rightward swipe operation of the user on the interface 1711, and a dynamic picture 17121 (for example, a still picture of the dynamic picture) is displayed on the interface 1712. The mobile phone 230 may display an interface 1713 shown in FIG. 17B in response to a rightward swipe operation of the user on the interface 1712, and a still picture 17131 (for example, a full picture of the still picture) is displayed on the interface 1713. Further, if a new picture is generated in the "Camera" album on the tablet 210, the mobile phone 230 may further display an interface 1714 shown in FIG. 17B in response to a rightward swipe operation of the user on the interface 1713, and the new picture is displayed on the interface 1714. The mobile phone 230 may obtain information of the new picture from the tablet 210 in response to the rightward swipe operation of the user on the interface 1713, to display the new picture.

After displaying the grid page, or after obtaining and displaying information of a multimedia resource in response to a viewing operation of the user for any thumbnail on the grid page, the mobile phone 230 may perform an operation like sharing, saving, copying, or editing for the multimedia resource.

In a specific implementation, the mobile phone 230 may display an operation control of the multimedia resource in response to the viewing operation of the user for any thumbnail on the grid page. The operation control includes at least one of the following: an operation control of a sharing operation, an operation control of a save operation (also referred to as a save control), an operation control of a copy operation (also referred to as a copy control), and an operation control of an edit operation.

For example, the bottom of the interface 1502 shown in FIG. 15, the bottom of the interface 1602 shown in FIG. 16, and the bottom of the interface 1702 and the interface 1703 shown in FIG. 17A all include operation controls such as an operation control "Share" of a sharing operation, an operation control "Save" of a save operation, an operation control "Copy" of a copy operation, and an operation control "Edit" of an edit operation.

Subsequently, in response to a selection operation of the user for the operation control, the mobile phone 230 may perform a corresponding operation like sharing, editing, saving, or copying, for the multimedia resource corresponding to the thumbnail.

In another specific implementation, after displaying the grid page, the mobile phone 230 may receive a selection operation of the user for the grid page. The selection operation may be a touch and hold operation of the user for any thumbnail on the grid page, or the selection operation may be a tap operation of the user for a preset control (which is used to trigger the mobile phone 230 to display a selection control and an operation option) on the grid page. An example in which the selection operation is a touch and hold operation of the user for any thumbnail on the grid page is used for description below.

In response to a selection operation of the user for the grid page, the mobile phone 230 may display a selection control in each thumbnail on the grid page, and display operation options on the grid page. The selection control is used to trigger the mobile phone 230 to select a corresponding thumbnail. In this implementation, the operation options further include an operation control of a select-all operation and an operation control of a creating operation. The operation control of the select-all operation is used to select thumbnails in batches. The operation control of the creating operation is used to create a video by using a selected picture.

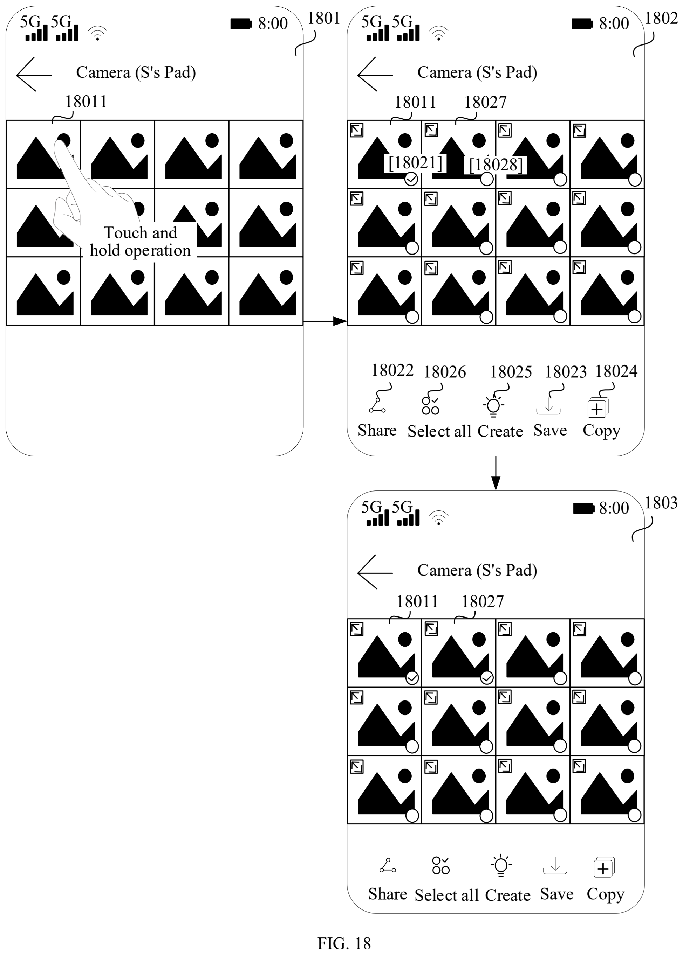

In an example in which the grid page is an interface 1801 shown in FIG. 18, the mobile phone 230 may display an interface 1802 shown in FIG. 18 in response to a touch and hold operation of the user for a thumbnail 18011 on the interface 1801. The interface 1802 is also a grid page, but different from the interface 1801, each thumbnail on the interface 1802 includes a selection control. For example, the thumbnail 18011 includes a selection control 18021. Moreover, the bottom of the interface 1802 further includes an operation control "Share" 18022 of the sharing operation, an operation control "Save" 18023 of the save operation, an operation control "Copy" 18024 of the copy operation, an operation control "Create" 18025 of the creating operation, and an operation control "Select all" 18026 of the select-all operation.

In a specific implementation, in response to a touch and hold operation of the user for any thumbnail on the grid page, the mobile phone 230 may display the selection control and the operation options, and select the thumbnail. In the example of FIG. 18, in response to the touch and hold operation of the user for the thumbnail 18011 on the interface 1801, the selection control 18021 of the thumbnail 18011 on the interface 1802 displayed by the mobile phone 230 is in a selected status, indicating that the thumbnail 18011 is selected.

After the selection control or the operation control of the select-all operation is displayed on the grid page, a corresponding thumbnail may be selected in the mobile phone 230 in response to a selection operation of the user for the thumbnail on the grid page. Subsequently, in response to a selection operation of the user for the operation control, the mobile phone 230 may perform a corresponding operation like sharing, editing, saving, or copying, for a multimedia resource corresponding to the thumbnail.

In the example of FIG. 18, after the mobile phone 230 displays the interface 1802 shown in FIG. 18, the mobile phone 230 may display an interface 1803 shown in FIG. 18 in response to a selection operation of the user for a thumbnail 18027 on the interface 1802. The thumbnail 18011 and the thumbnail 18027 on the interface 1803 are in a selected status. Subsequently, in response to selection operations of the user for "Share", "Save", and "Copy" at the bottom of the interface 1803, the mobile phone 230 may be respectively triggered to share, save, and copy multimedia resources corresponding to the thumbnail 18011 and the thumbnail 18027.

The operations of the mobile phone 230 for the multimedia resources are described below mainly by using an example in which the mobile phone 230 saves and copies the multimedia resources in response to selection operations of the user for the operation controls on the full picture page.

It may be understood that whether saving the multimedia resource or copying the multimedia resource, both operations mean operating original picture information of the multimedia resource. Therefore, in response to a selection operation of the user for the operation control of the save operation or the operation control of the copy operation, the mobile phone 230 may first obtain the original picture information of the multimedia resource, and then perform the operation on the original picture information.

In practice, before receiving the selection operation of the user for the operation control of the save operation or the operation control of the copy operation, the mobile phone 230 may already obtain the original picture information of the multimedia resource (as shown in examples of FIG. 16 and FIG. 17A). For example, in the example of FIG. 16, the mobile phone 230 already obtain the original picture information of the dynamic picture. For another example, in the example of FIG. 17A, the mobile phone 230 already obtain the original picture information of the video. After obtaining the original picture information, the mobile phone 230 may store the original picture information locally (for example, in the data middle platform 1 or in the gallery application).

It may be understood that obtaining the original picture information of the multimedia resource locally is faster than obtaining the original picture information from the tablet 210.

Based on this, in some embodiments, after receiving the selection operation of the user for the operation control of the save operation or the operation control of the copy operation, the mobile phone 230 may first detect whether a local cache includes original picture information of a to-be-saved or to-be-copied multimedia resource. If the local includes the original picture information of the to-be-saved or to-be-copied multimedia resource, the locally stored original picture information may be directly obtained for processing. If the local does not include the original picture information of the to-be-saved or to-be-copied multimedia resource, the original picture information of the to-be-saved or to-be-copied multimedia resource on the tablet 210 may be obtained, and the original picture information is processed after obtaining. In this way, for a case in which there is a local cache, saving or copying duration can be shortened.

If the local does not include the original picture information of the to-be-saved or to-be-copied multimedia resource, it takes long time to obtain the original picture information, and the mobile phone 230 may prompt that a file is being transferred. If the local includes the original picture information of the to-be-saved or to-be-copied multimedia resource, the original picture information can be quickly obtained and processed, and the mobile phone 230 does not need to prompt that a file is being transferred.

Saving processes of a still picture, a dynamic picture, and a video are respectively used as examples below for description.

### Example 1: Save a still picture.

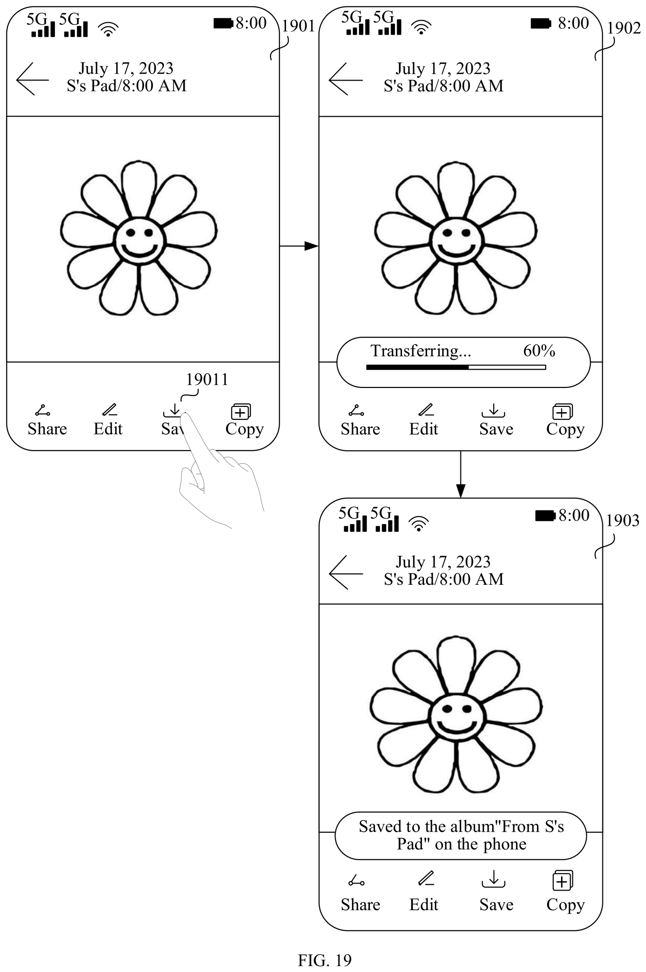

The mobile phone 230 may display an interface 1901 shown in FIG. 19. The interface 1901 includes a full picture of a still picture on the tablet 210 and "Save" 19011. "Save" 19011 is used to trigger the mobile phone 230 to perform the save operation. In response to a selection operation of the user for "Save" 19011 on the interface 1901, the mobile phone 230 may detect whether the local cache includes original picture information of the still picture. Generally, in this case, the mobile phone 230 has not obtained the original picture information of the still picture (as described in FIG. 10 and related text thereof). In other words, the mobile phone 230 may detect that the local cache does not include the original picture information of the still picture, and the mobile phone 230 needs to obtain the original picture information of the still picture on the tablet 210. For example, the mobile phone 230 may display an interface 1902 shown in FIG. 19. The interface 1902 includes prompt text "Transferring..." to prompt that a file is being transferred. After obtaining the original picture information of the still picture, the mobile phone 230 may display an interface 1903 shown in FIG. 19. The interface 1903 includes prompt text "Saved to the album "From S's Pad" on the phone" to prompt successful saving.

### Example 2: Save a dynamic picture.

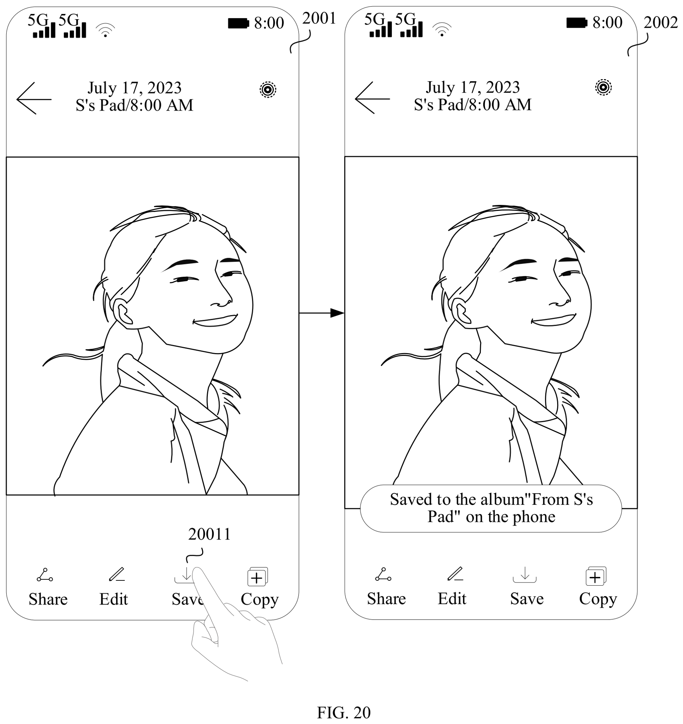

The mobile phone 230 may display an interface 2001 shown in FIG. 20. The interface 2001 includes an original picture of a dynamic picture on the tablet 210 and "Save" 20011. "Save" 20011 is used to trigger the mobile phone 230 to perform the save operation. In response to a selection operation of the user for "Save" 20011 on the interface 2001, the mobile phone 230 may detect whether the local cache includes original picture information of the dynamic picture. Generally, in this case, the mobile phone 230 already obtains the original picture information of the dynamic picture (as described in FIG. 11 and related text thereof). In other words, the mobile phone 230 may detect that the local cache includes the original picture information of the dynamic picture. In this case, the mobile phone 230 can quickly obtain the original picture information of the dynamic picture locally and save the original picture information. For example, the mobile phone 230 may display an interface 2002 shown in FIG. 20. The interface 2002 includes prompt text "Saved to the album "From S's Pad" on the phone" to prompt successful saving.

### Example 3: Save a video.

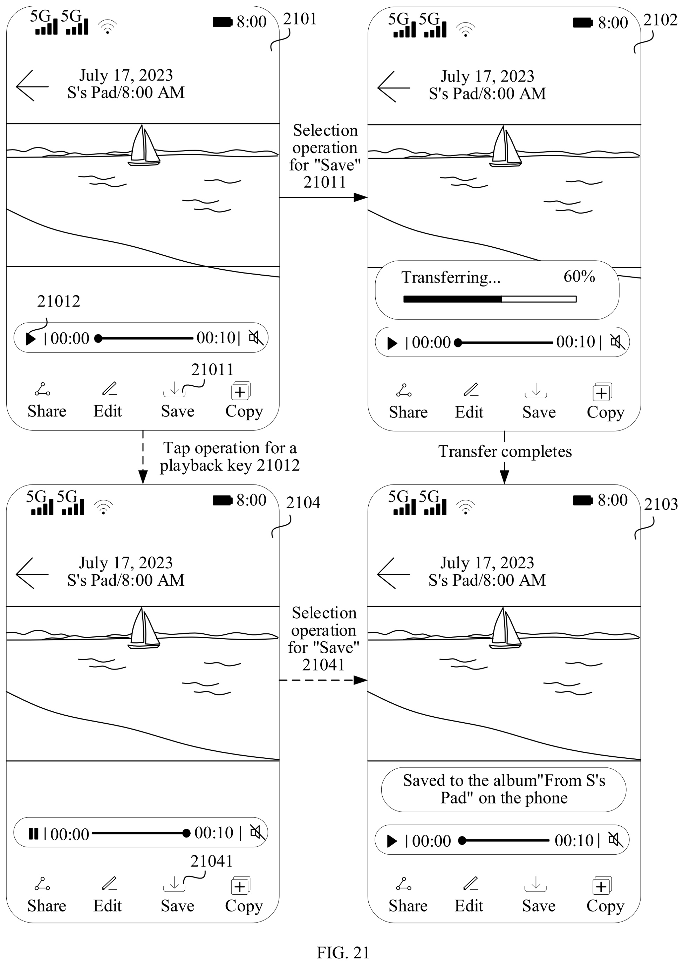

The mobile phone 230 may display an interface 2101 shown in FIG. 21. The interface 2101 includes a cover of a video on the tablet 210 and "Save" 21011. "Save" 21011 is used to trigger the mobile phone 230 to perform the save operation. In response to a selection operation of the user for "Save" 21011 on the interface 2101, the mobile phone 230 may detect whether the local cache includes original picture information of the video. Generally, when the mobile phone 230 displays the interface 2101, the video is not played back, and in this case, the mobile phone 230 has not obtained the original picture information of the video (as described in FIG. 12A and FIG. 12B and related text thereof). In other words, the mobile phone 230 may detect that the local cache does not include the original picture information of the video, and the mobile phone 230 needs to obtain the original picture information of the video on the tablet 210. For example, the mobile phone 230 may display an interface 2102 shown in FIG. 21. The interface 2102 includes prompt text "Transferring..." to prompt that a file is being transferred. After obtaining the original picture information of the video, the mobile phone 230 may display an interface 2103 shown in FIG. 21. The interface 2103 includes prompt text "Saved to the album "From S's Pad" on the phone" to prompt successful saving.

However, after the mobile phone 230 displays the interface 2101 shown in FIG. 21, in response to a tap operation of the user for a playback key 21012 on the interface 2101, the mobile phone 230 may obtain the original picture information of the video on the tablet 210, and play back the video based on the original picture information of the video. For example, after obtaining the original picture information of the video, the mobile phone 230 may display an interface 2104 shown in FIG. 21, and the video is being played back on the interface 2104. The interface 2104 includes "Save" 21041. In response to a selection operation of the user for "Save" 21041 on the interface 2104, the mobile phone 230 may detect whether the local cache includes original picture information of the video. Generally, when the mobile phone 230 displays the interface 2104, the video is already being played back, and in this case, the mobile phone 230 already obtains the original picture information of the video. In other words, the mobile phone 230 may detect that the local cache includes the original picture information of the video. In this case, the mobile phone 230 can quickly obtain the original picture information of the video locally and save the original picture information. For example, the mobile phone 230 may display an interface 2103 shown in FIG. 21.

The mobile phone 230 may save the multimedia resources to the mobile phone in response to the save operation of the user. Specifically, when the mobile phone 230 stores the multimedia resource from the tablet 210 for the first time, the mobile phone 230 may create a target album 1 (also referred to as a second album) in a local gallery, and subsequently, may store all multimedia resources from the tablet 210 to the target album 1. The target album 1 may be named in a format of "from" + "device name". For example, if a device name of the tablet 210 is S's Pad, the multimedia resources from the tablet 210 may be stored into an album "from S's Pad".

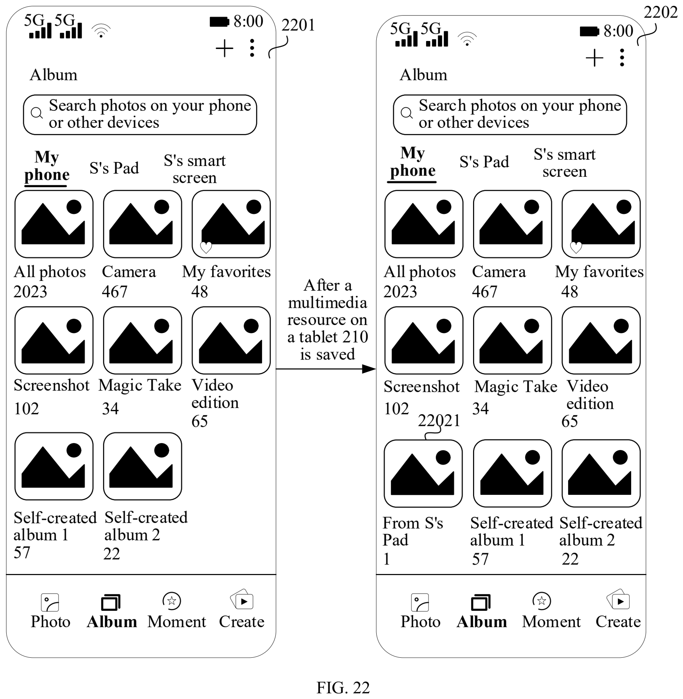

For example, before saving, in the mobile phone 230, the multimedia resources on the tablet 210, the mobile phone 230 may display an interface 2201 shown in FIG. 22. The interface 2201 does not include the album "from S's Pad". After saving, in the mobile phone 230, the multimedia resources on the tablet 210, the mobile phone 230 may display an interface 2202 (also referred to as a fifth interface) shown in FIG. 22. The interface 2202 includes an album "from S's Pad" 22021. The album "from S's Pad" 22021 includes multimedia resources saved to the mobile phone 230 from the tablet 210.

In addition, as multimedia resources from the tablet 210 are continuously saved, multimedia resources in the target album 1 may be continuously increased.

A gallery of the mobile phone 230 generally includes two types of albums: a system album and a self-created album. The system album is an album automatically created by the mobile phone 230. For example, "All photos", "Album", "My favorites", "Screenshot", "Magic Take", and "Video edition" on the interface 2202 are all system albums. Unlike the system album, the self-created album is an album created by the mobile phone 230 based on an operation of creating an album by the user. For example, "Self-created album 1" and "Self-created album 2" on the interface 2202 are both self-created albums. Generally, the system album is located in front of the self-created album. It may be understood that the user may also adjust an arrangement sequence of a plurality of albums in the gallery, so that some or all of the self-created albums are located in front of at least one system album.

In some embodiments, the mobile phone 230 may save the target album 1 to the gallery of the mobile phone 230 behind the last system album. In this way, it is convenient for the user to find the target album 1 behind the system album.

In addition, if the mobile phone 230 stores both the multimedia resources from the tablet 210 and the multimedia resources from the smart screen 220, the mobile phone 230 may store, according to a sequence of creating the target album 1, a target album 1 created later first and a target album 1 created earlier last.

Further, after the device name of the tablet 210 is changed, when the mobile phone 230 stores the multimedia resources from the tablet 210 again, a target album 1 needs to be created again.

In FIG. 19 to FIG. 22, only the saving processes are described. In the saving process, the mobile phone 230 needs to obtain original picture information of a to-be-saved multimedia resource in response to the save operation of the user. In a copy process, in response to a copy operation of the user, the mobile phone 230 may first provide candidate albums for the user to select. In response to an operation that the user selects a target album 2 (also referred to as a second album) from the candidate albums, the mobile phone 230 obtains original picture information of a to-be-copied multimedia resource, and copies the original picture information to the target album 2.

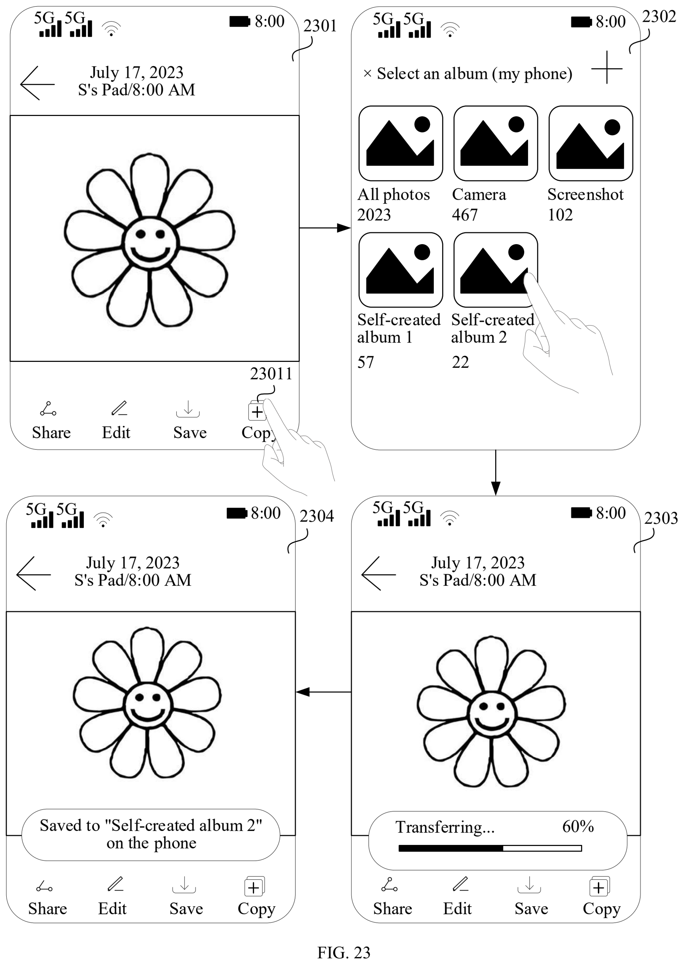

For example, the mobile phone 230 may display an interface 2301 shown in FIG. 23. The interface 2301 includes a full picture of a still picture on the tablet 210 and "Copy" 23011. "Copy" 23011 is used to trigger the mobile phone 230 to perform the copy operation. The mobile phone 230 may display an interface 2302 shown in FIG. 23 in response to a selection operation of the user for "Copy" 23011 on the interface 2301. The interface 2302 includes candidate albums, such as "All photos", "Camera", "Self-created album 1", and "Self-created album 2". The mobile phone 230 may obtain original picture information of the still picture in response to a selection operation of the user for "Self-created album 2" on the interface 2302 (in other words, the target album 2 is "Self-created album 2"). For example, the mobile phone 230 may display an interface 2303 shown in FIG. 23. The interface 2303 includes prompt text "Transferring..." to prompt that a file is being transferred. After obtaining the original picture information of the still picture, the mobile phone 230 may display an interface 2304 shown in FIG. 23. The interface 2304 includes prompt text "Saved to local "Self-created album 2"" to prompt successful copying.

FIG. 23 shows a process of copying the still picture. It may be understood that if the to-be-copied multimedia resource is a dynamic resource, after receiving the selection operation of the user for the target album 2, the mobile phone 230 can quickly obtain original picture information of the dynamic picture locally. Therefore, the mobile phone 230 can directly display an interface indicating successful copying. For a specific principle, refer to related descriptions of FIG. 20. If the to-be-copied multimedia resource is a video, and the mobile phone 230 receives the copy operation of the user before playing back the video, after receiving the selection operation of the user for the target album 2, the mobile phone 230 needs to obtain original picture information of the video on the tablet 210. Therefore, the mobile phone 230 may first display an interface with prompting text "Transferring", and display an interface indicating successful copying after obtaining is completed. If the to-be-copied multimedia resource is a video, and the mobile phone 230 receives the copy operation of the user after playing back the video, after receiving the selection operation of the user for the target album 2, the mobile phone 230 can quickly obtain original picture information of the dynamic picture locally. Therefore, the mobile phone 230 can directly display an interface indicating successful copying. For a specific principle, refer to related descriptions of FIG. 21.

After successful copying, the mobile phone 230 may display a grid page of the target album 2 in response to an access operation of the user for the target album 2. The grid page of the target album 2 includes multimedia resources successfully copied.

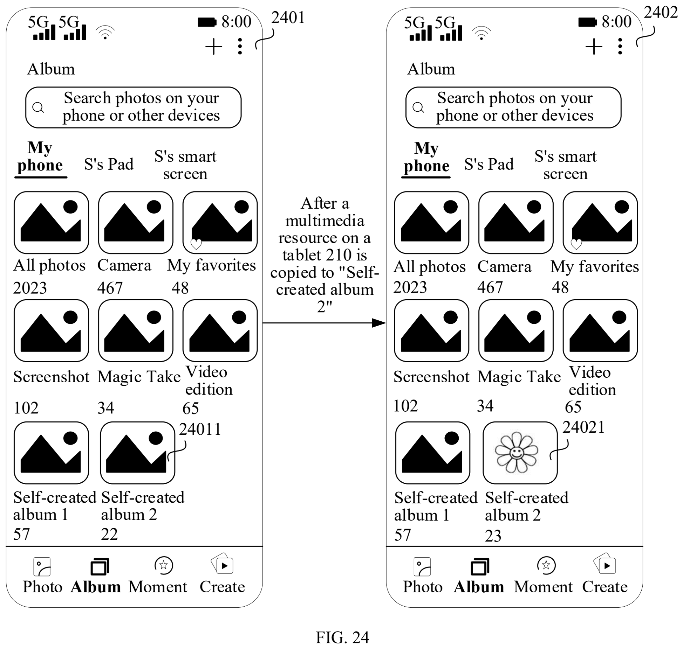

In an example in which the target album 2 is the "Self-created album 2" on the mobile phone 230, before the multimedia resources on the tablet 210 are copied to the "Self-created album 2" on the mobile phone 230, the mobile phone 230 may display an interface 2401 shown in FIG. 24. The interface 2401 includes "Self-created album 2" 24011, and a quantity of multimedia resources included in "Self-created album 2" 24011 is 22. After the multimedia resources on the tablet 210 are copied to the "Self-created album 2" on the mobile phone 230, the mobile phone 230 may display an interface 2402 shown in FIG. 24. The interface 2402 includes "Self-created album 2" 24021. Different from "Self-created album 2" 24011 on the interface 2401, a cover of "Self-created album 2" 24021 on the interface 2402 is changed, and a quantity of multimedia resources included in "Self-created album 2" 24021 is updated to 23. In other words, one multimedia resource of a thumbnail as shown by a cover of "Self-created album 2" 24021 is added to "Self-created album 2" 24021.

In practice, when the mobile phone 230 obtains the original picture information of the multimedia resource on the tablet 210, for example, the mobile phone 230 obtains the original picture information in response to a viewing operation of the user for a thumbnail on the grid page, or obtains the original picture information in response to a selection operation of the user for an operation control, obtaining may fail. For example, when a data packet is lost during transmission, obtaining fails. In this case, the mobile phone 230 may prompt that transferring fails.

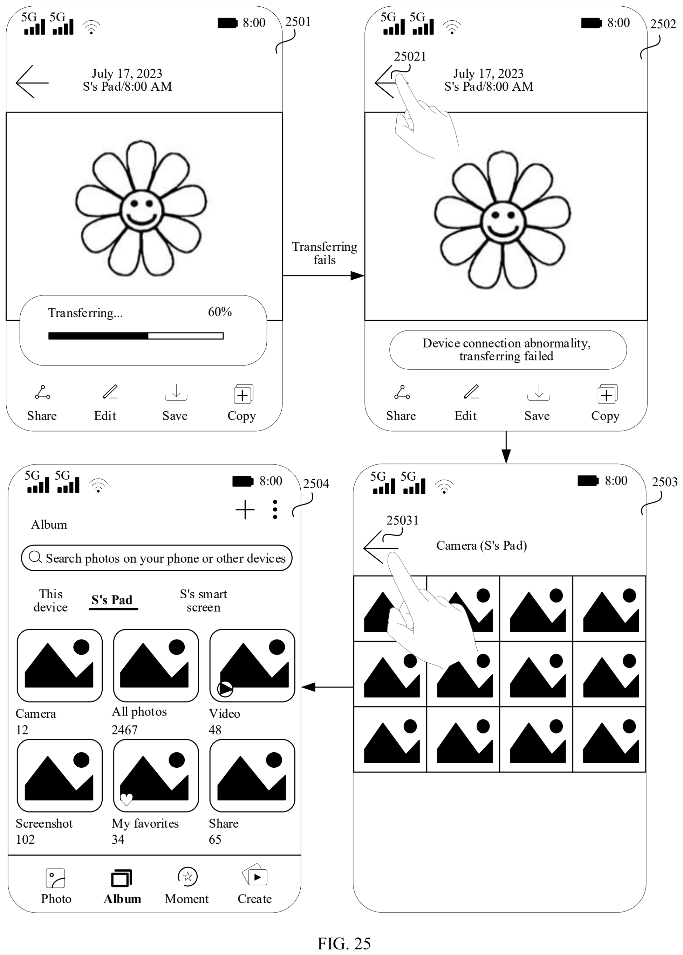

For example, in a process in which the mobile phone 230 obtains the original picture information from the tablet 210, the mobile phone 230 may display an interface 2501 shown in FIG. 25. The interface 2501 includes prompt text "Transferring...", used to prompt that a file is being transferred. After transferring fails, the mobile phone 230 may display an interface 2502 shown in FIG. 25. The interface 2502 includes prompt text "Device connection abnormality, transferring failed" to prompt that transferring fails.

After obtaining the original picture information fails, the mobile phone 230 may normally display the grid page in response to an operation of returning to the grid page. The mobile phone 230 may also normally display the album page in response to an operation of continuing to return, and the album page includes the albums on the tablet 210.

In the example of FIG. 25, the mobile phone 230 may display an interface 2503 shown in FIG. 25 in response to a tap operation of the user for a return control 25021 on the interface 2502. The interface 2503 is a grid page. The mobile phone 230 may display an interface 2504 shown in FIG. 25 in response to a tap operation of the user for a return control 25031 on the interface 2503. The interface 2504 is an album page, and the interface 2504 usually includes the albums on the tablet 210.

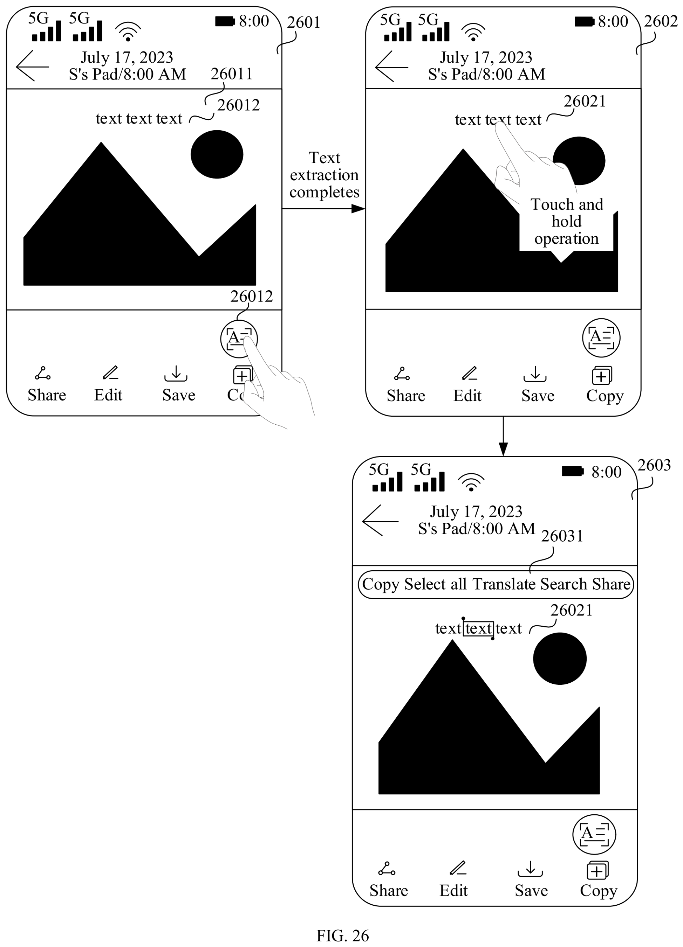

Some multimedia resources on the tablet 230 further include text. Generally, text in a multimedia resource cannot be operated. In an example in which the multimedia resource is a picture 26011 on an interface 2601 shown in FIG. 26, the picture 26011 includes text "text text text " 26012, and when the user touches and holds "text text text " 26012, the mobile phone 230 cannot be triggered to select some or all of "text text text " 26012.

In some embodiments, if the multimedia resource on the tablet 230 includes text, when displaying a full picture page of the multimedia resource, the mobile phone 230 may provide a text extraction control on the full picture page. The mobile phone 230 may extract the text in the multimedia resource in response to a trigger operation (like a tap operation or a touch and hold operation) of the user for the text extraction control on the full picture page. For example, the text extraction control is a key 26012 on the interface 2601 shown in FIG. 26. The mobile phone 230 may extract text "text text text" 26012 in a multimedia resource 26011 in response to a tap operation of the user for the key 26012 on the interface 2601.

Further, after extraction is completed, in response to a trigger operation (like a touch and hold operation) of the user for the text in the multimedia resource, the mobile phone 230 may select some or all of the text, and provide operation options for the text, for the user to perform an operation for a selected text. For example, after completing text extraction, the mobile phone 230 may display an interface 2603 shown in FIG. 26 in response to a touch and hold operation of the user for text "text text text" 26021 on an interface 2602 shown in FIG. 26. On the interface 2603, a 2^{nd} "text" in "text text text" 26021 is selected, and the interface 2603 includes a plurality of operation options, for example, options such as copy, select all, translate, search, and share in a pop up box 26031.

According to this embodiment, the mobile phone 230 can extract, from the mobile phone, the text in the multimedia resource on the tablet 210, to facilitate subsequent operations such as copying and translation for the text in the multimedia resource.

An embodiment of this application further provides a chip system. The chip system includes at least one processor and at least one interface circuit. The processor and the interface circuit may be interconnected through a line. For example, the interface circuit may be configured to receive a signal from another apparatus (for example, a memory of a terminal). For another example, the interface circuit may be configured to transmit a signal to another apparatus (for example, a processor). For example, the interface circuit may read instructions stored in the memory and send the instructions to the processor. When the instruction is executed by the processor, the terminal is enabled to perform the steps in the foregoing embodiments. Certainly, the chip system may further include other discrete devices. This is not specifically limited in embodiments of this application.

This embodiment further provides a computer-readable storage medium. The computer-readable storage medium stores computer instructions. When the computer instructions are run on a terminal, the terminal is enabled to perform the functions or steps in the foregoing method embodiments.

This embodiment further provides a computer program product. When the computer program product runs on a computer, the computer is enabled to perform the functions or steps in the foregoing method embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the functions or steps in the foregoing method embodiments.

The chip system, the computer-readable storage medium, the computer program product, or the apparatus in this embodiment may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing functional modules is used as an example for illustration. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, to be specific, may be located in one place, or may be distributed in a plurality of different places. Some or all of the units may be selected according to actual needs to achieve the objectives of the solutions of embodiments.

In addition, functional units in embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes: any medium that can store program code, such as a USB flash drive, a portable hard drive, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A multimedia resource access method, comprising:
displaying, by a first device, a first interface, wherein the first interface comprises a first region and a second region, a first option, a second option, and a third option are displayed in the first region, the first option corresponds to the first device, the second option corresponds to a second device, the third option corresponds to a third device, and preview information of an album on the first device is displayed in the second region;
displaying in the second region, by the first device, preview information of an album on the second device in response to a selection operation for the second option; and
displaying in the second region, by the first device, preview information of an album on the third device in response to a selection operation for the third option.

2. The method according to claim 1, wherein after the displaying in the second region, by the first device, preview information of an album on the second device, the method further comprises:
displaying, by the first device, a second interface in response to an access operation that is for a first album on the second device and that is on the first interface, wherein the second interface comprises a thumbnail of a multimedia resource in the first album;
displaying, by the first device, a third interface in response to a viewing operation for a first thumbnail on the second interface, wherein the third interface is used to present a first multimedia resource corresponding to the first thumbnail, and
the first device is disconnected from the second device; and
displaying, by the first device, a fourth interface in response to a return operation for the third interface, wherein the fourth interface comprises the first option and the third option, and the fourth interface does not comprise the preview information of the album on the second device.

3. The method according to claim 2, wherein the fourth interface further comprises the second option.

4. The method according to claim 3, wherein the displaying, by the first device, a fourth interface comprising the second option in response to a return operation for the third interface comprises:
displaying, by the first device, the first device can find the second device, the fourth interface comprising the second option in response to the return operation for the third interface.

5. The method according to claim 2, wherein the fourth interface does not comprise the second option.

6. The method according to claim 5, wherein the displaying, by the first device, a fourth interface not comprising the second option in response to a return operation for the third interface comprises:
displaying, by the first device, the first device does not find the second device, the fourth interface not comprising the second option in response to the return operation for the third interface.

7. The method according to any one of claims 2 to 6, wherein after the displaying, by the first device, a third interface, the method further comprises:
displaying, by the first device, the first device is not disconnected from the second device, the second interface in response to the return operation for the third interface; and
displaying, by the first device, in response to a return operation for the second interface, the first interface on which the second region comprises the preview information of the album on the second device.

8. The method according to any one of claims 2 to 6, wherein the displaying, by the first device, a fourth interface in response to a return operation for the third interface comprises:
displaying, by the first device, the first device detects that the first device is disconnected from the second device, the fourth interface in response to the return operation for the third interface.

9. The method according to claim 8, wherein the displaying, by the first device, the first device detects that the first device is disconnected from the second device, the fourth interface in response to the return operation for the third interface comprises:
displaying, by the first device, the fourth interface in response to a return operation for the third interface at a first moment, wherein the first moment is a moment after the first device detects that the first device is disconnected from the second device, and
the method further comprises:
displaying, by the first device, the second interface in response to a return operation for the third interface at a second moment, wherein
the second moment is a moment after the first device is disconnected from the second device, but the second moment is a moment before the first device detects that the first device is disconnected from the second device.

10. The method according to any one of claims 2 to 9, wherein the first device comprises a data middle platform and a first application, wherein the first application comprises a gallery application, or the first application comprises an application having a permission to access the gallery application,
after the first device is disconnected from the second device, the method further comprises:
detecting, by the data middle platform, that the first device is disconnected from the second device; and
sending, by the data middle platform, a disconnection notification to the first application, and
the displaying, by the first device, a fourth interface in response to a return operation for the third interface comprises:
displaying, by the first application, if the first application has received the disconnection notification, the fourth interface in response to the return operation for the third interface.

11. The method according to any one of claims 2 to 10, wherein the third interface further comprises a preset operation control, wherein the preset operation control comprises a save control and/or a copy control, and
after the displaying, by the first device, a third interface, the method further comprises:
storing, by the first device, the first multimedia resource into a second album on the first device in response to a selection operation for the preset operation control.

12. The method according to claim 11, wherein the first multimedia resource is a still picture, or the first multimedia resource is a video, but the first device has not played back the video on the third interface, and
the storing, by the first device, the first multimedia resource into a second album on the first device in response to a selection operation for the preset operation control comprises:
displaying, by the first device, a first prompt on the third interface in response to the selection operation for the preset operation control, wherein the first prompt is used to prompt that a file is being transferred; and
storing, by the first device, the first multimedia resource into the second album after transfer of the file ends.

13. The method according to claim 12, wherein the first multimedia resource is a dynamic picture, or the first multimedia resource is a video, and the first device has played back the video on the third interface, and the first device skips displaying the first prompt in response to the selection operation for the preset operation control.

14. The method according to any one of claims 11 to 13, wherein the preset operation control is the save control, and the second album is an album named after the second device.

15. The method according to claim 14, wherein after the storing, by the first device, the first multimedia resource into a second album on the first device, the method further comprises:
displaying, by the first device, a fifth interface, wherein the fifth interface comprises the preview information of the album on the first device, and preview information of the second album is located behind preview information of a last system album on the album on the first device.

16. The method according to any one of claims 11 to 13, wherein the preset operation control is the copy control, and
the storing, by the first device, the first multimedia resource into a second album on the first device in response to a selection operation for the preset operation control comprises:
displaying, by the first device, the preview information of the album on the first device in response to the selection operation for the preset operation control; and
storing, by the first device, the first multimedia resource into the second album on the first device in response to a selection operation for the second album on the first device.

17. The method according to any one of claims 1 to 16, wherein the method further comprises:
displaying, by the first device, a sixth interface, wherein the sixth interface comprises a photo on the first device, and in a process of displaying the sixth interface, the first device finds the second device and the third device, and
the displaying, by a first device, a first interface comprises:
displaying, by the first device, the first interface in response to an operation of switching to an album page, wherein the second option and the third option are located behind the first option, and the second option and the third option are sorted based on priorities of the second device and the third device.

18. The method according to any one of claims 1 to 17, wherein the displaying in the second region, by the first device, preview information of an album on the second device in response to a selection operation for the second option comprises:
displaying in the second region, by the first device, if a quantity of devices connected to the first device does not reach a first quantity, the preview information of the album on the second device in response to the selection operation for the second option.

19. The method according to any one of claims 1 to 17, wherein the displaying in the second region, by the first device, preview information of an album on the second device in response to a selection operation for the second option comprises:
displaying, by the first device, if a quantity of devices connected to the first device reaches a first quantity, a first window in response to the selection operation for the second option, wherein the first window comprises device options in one-to-one correspondence with the first quantity of connected devices, the first quantity of device options comprise a first device option, and the first device option corresponds to a fourth device;
disconnecting, by the first device, from the fourth device in response to a disconnection operation for the first device option; and
displaying in the second region, by the first device, the preview information of the album on the second device.

20. The method according to claim 19, wherein the method further comprises:
displaying, by the first device, if the quantity of devices connected to the first device reaches the first quantity, the first window in response to the selection operation for the second option; and
displaying, by the first device in the second region in response to an operation indicating to close the first window, prompt information indicating that a quantity of connected devices has exceeded an upper limit.

21. An electronic device, wherein the electronic device comprises a display, a memory, and a processor, and the display, the memory, and the processor are coupled, wherein the memory stores computer program code, the computer program code comprises computer instructions, and when the computer instructions are executed by the processor, the electronic device is enabled to perform the method according to any one of claims 1 to 20.

22. A computer-readable storage medium, comprising computer instructions, wherein when the computer instructions are run on an electronic device, the electronic device is enabled to perform the method according to any one of claims 1 to 20.
